(19) 

**Europäisches Patentamt**
**European Patent Office**
**Office européen des brevets**

(11) **EP 4 462 750 A1**

(12) **EUROPEAN PATENT APPLICATION**
published in accordance with Art. 153(4) EPC

(43) Date of publication:
**13.11.2024 Bulletin 2024/46**

(21) Application number: **23765967.7**

(22) Date of filing: **07.03.2023**

(51) International Patent Classification (IPC):
***H04L 47/125*** *(2022.01)*

(52) Cooperative Patent Classification (CPC):
**G06N 3/04; G06N 3/098; H04L 47/125;**
**H04W 16/22**

(86) International application number:
**PCT/CN2023/079973**

(87) International publication number:
**WO 2023/169389 (14.09.2023 Gazette 2023/37)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **10.03.2022 CN 202210240862**

(71) Applicant: **Huawei Technologies Co., Ltd.**
**Shenzhen, Guangdong 518129 (CN)**

(72) Inventors:
• **TENG, Wei**
**Shenzhen, Guangdong 518129 (CN)**

• **DAI, Shengchen**
**Shenzhen, Guangdong 518129 (CN)**
• **WANG, Jian**
**Shenzhen, Guangdong 518129 (CN)**
• **LI, Rong**
**Shenzhen, Guangdong 518129 (CN)**
• **WANG, Jun**
**Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(54) **COMMUNICATION METHOD AND COMMUNICATION APPARATUS**

(57) Embodiments of this application provide a communication method and a communication apparatus. The method includes: A central node obtains N indication parameters that are in a one-to-one correspondence with N distributed nodes, where a first indication parameter in the N indication parameters indicates a communication capability and a computing capability of a first distributed node, and the first distributed node is any node in the N distributed nodes; the central node determines M network parameters based on the N indication parameters, where the M network parameters are in a one-to-one correspondence with M distributed nodes in the N distributed nodes, and a first network parameter in the M network parameters indicates at least one of a communication configuration or a neural network architecture configuration of the first distributed node; and the central node sends the M network parameters. According to the method, in embodiments of this application, neural network architecture search may be performed in a variable communication environment, and a neural network architecture determined through the neural network architecture search can meet requirements of a node for a neural network with a low latency and high model accuracy.

FIG. 4

## Description

This application claims priority to Chinese Patent Application No. 202210240862.6, filed with the China National Intellectual Property Administration on March 10, 2022 and entitled "COMMUNICATION METHOD AND COMMUNICATION APPARATUS", which is incorporated herein by reference in its entirety.

## TECHNICAL FIELD

Embodiments of this application relate to the field of communication technologies, and more specifically, to a communication method and a communication apparatus.

## BACKGROUND

In a communication network, a distributed node has a specific computing capability and can process local data. This provides computing capability support for application of an artificial intelligence (artificial intelligence, AI) algorithm in the communication network. However, mismatching between a communication resource and a computing resource of the distributed node becomes a bottleneck of communication-enabled AI application. Therefore, neural network architecture search may be performed in the communication network, to implement appropriate allocation of computing resources and communication resources between a distributed node and a central node.

An existing solution for neural network architecture search in a communication network is designed based on a given communication network, and cannot be applied to a variable communication environment.

Currently, how to properly apply a technology of neural network architecture search in a communication network in a variable communication environment is a technical problem to be urgently resolved.

## SUMMARY

Embodiments of this application provide a communication method and a communication apparatus. According to the method, in embodiments of this application, neural network architecture search may be performed in a variable communication environment, and a neural network architecture determined through the neural network architecture search in the variable communication environment can meet requirements of a node for a neural network with a low latency and high model accuracy.

According to a first aspect, a communication method is provided, including: A central node obtains N indication parameters that are in a one-to-one correspondence with N distributed nodes, where a first indication parameter in the N indication parameters indicates a communication capability and a computing capability of a first distributed node, and the first distributed node is any distributed node in the N distributed nodes; the central node determines M network parameters based on the N indication parameters, where the M network parameters are in a one-to-one correspondence with M distributed nodes in the N distributed nodes, and a first network parameter in the M network parameters indicates at least one of a communication configuration or a neural network architecture configuration of the first distributed node; and the central node sends the M network parameters, where N and M are positive integers, and M is less than or equal to N.

A plurality of network parameters are determined by comprehensively considering the communication capabilities and the computing capabilities of the distributed nodes, and the plurality of network parameters match a specific communication environment. For example, communication capabilities of the distributed node are different in different communication environments. The central node may determine, based on communication capabilities and computing capabilities that are reported by the distributed node and that correspond to different communication environments, a plurality of network parameters that match a specific communication environment. The plurality of network parameters are used to determine a neural network architecture corresponding to the specific communication environment, and the neural network architecture can meet requirements of a node for a neural network with a low latency and high model accuracy.

According to the foregoing technical solution, in embodiments of this application, neural network architecture search may be performed in a communication network in a variable communication environment, and a neural network architecture determined through the neural network architecture search in the variable communication environment can meet requirements of a node for high model accuracy and a low latency of a neural network.

In a possible implementation, the first indication parameter further indicates a service characteristic of the first distributed node.

The central node may select, based on a service characteristic of a distributed node, a distributed node and a communication link that are suitable for processing a service of such type (for example, a distributed node mounted with a graphics processing unit (graphics processing unit, GPU) is suitable for processing a service of an image type), to improve resource utilization.

In a possible implementation, the N indication parameters are further used to determine training parameters corresponding to the M distributed nodes, the training parameters include a first training parameter, and the first training parameter indicates a training order in which the first distributed node trains a neural network.

In embodiments of this application, based on a communication link of an existing communication network, a sequence of neural network nodes may be adjusted, so that communication resources and computing resources of the nodes can be fully utilized, implementing efficient matching between the communication resources and the computing resources.

In a possible implementation, the method further includes: The central node sends the training parameters.

Optionally, the training parameter is included in broadcast information, the broadcast information includes a training parameter corresponding to each of the M distributed nodes, and the central node sends the broadcast information to the M distributed nodes.

Optionally, the training parameter is included in unicast information, the unicast message includes a training parameter of one distributed node, and the central node sends corresponding unicast information to each of the M distributed nodes.

Optionally, the central node sends the training parameter to each distributed node. For example, the central node sends, to the first distributed node, a training parameter corresponding to the first distributed node, and sends, to a second distributed node, a training parameter corresponding to the second distributed node.

Optionally, the central node sends the training parameter to a part of the M distributed nodes. For example, the central node sends, to the first distributed node, the training parameter corresponding to the first distributed node and the training parameter corresponding to the second distributed node.

In a possible implementation, the first indication parameter includes first communication capability information, first computing capability information, and first service characteristic information. The first communication capability information indicates the communication capability of the first distributed node, the first computing capability information indicates the computing capability of the first distributed node, and the first service characteristic information indicates the service characteristic of the first distributed node.

In a possible implementation, the first indication parameter further includes second communication capability information, second computing capability information, and second service characteristic information. The second communication capability information indicates a communication capability of the second distributed node, the second computing capability information indicates a computing capability of the second distributed node, and the second service characteristic information indicates a service characteristic of the second distributed node, where the second distributed node is a distributed node having a connection relationship with the first distributed node.

In a possible implementation, the first communication capability information includes at least one of the following: channel characteristic information or communication resource information of a channel between the central node and the first distributed node.

The channel characteristic information or the communication resource information can be used to represent a communication capability of a distributed node. The central node can determine, based on the channel characteristic information or the communication resource information, a communication network parameter corresponding to each distributed node, to facilitate operations such as communication resource allocating, communication mode setting, and modulation and coding scheme (modulation coding scheme, MCS) adjusting.

In a possible implementation, the first communication capability information includes at least one of the following: channel characteristic information or communication resource information of a channel between a second distributed node and the first distributed node, and the second distributed node is a distributed node having a connection relationship with the first distributed node.

The first communication capability information may include channel characteristic information or communication resource information between the first distributed node and a node having a connection relationship with the first distributed node. The node may be the central node, or may be the second distributed node.

In a possible implementation, the channel characteristic information includes at least one of the following: channel state information, a signal-to-noise ratio, link quality, or a location of the first distributed node.

For example, when the SNR of the first distributed node is small (for example, the SNR is 0 dB), channel noise is large, a channel condition is poor, and the communication capability of the first distributed node is poor. For example, when the link quality of the first distributed node is very good, the communication capability of the first distributed node is strong. For another example, a location of a distributed node also affects the communication capability. For example, a distributed node at a cell edge is subject to a weak signal and strong interference, and the communication capability of the first distributed node is weak. For another example, when the link quality of the first distributed node is poor, a packet loss rate is high, causing data retransmission and increased energy consumption, and the communication capability of the first distributed node is weak.

In a possible implementation, the first network parameter includes a first communication network parameter and a first neural network parameter. The first communication network parameter indicates the communication configuration of the first distributed node, and the first neural network parameter indicates the neural network architecture configuration of the first distributed node.

For example, in time division multiplexing, the communication configuration is a proportion of time in which a central node (a network device) serves a distributed node (a terminal device). In frequency division multiplexing, the communication configuration is a proportion of occupying entire spectrum resources by a distributed node. In coordinated multipoint transmission/reception, the communication configuration is that a distributed node (a network device) and a neighboring distributed node (a network device) are in a joint processing-coordinated multipoint transmission/reception mode or a coordinated beamforming mode. In a coding and modulation mode, the communication configuration is a selected MCS order. In resource scheduling, the communication configuration is a transmit power allocation scheme used when a central node serves different nodes, and the like.

For example, the neural network architecture configuration may be understood as a quantity of layers of a neural network architecture a distributed node can process, a specific operation at each layer of a neural network architecture a distributed node can process, a weight of a neural network architecture (the weight of the neural network architecture may be understood as a specific value of an operation at each layer), or the like.

The foregoing description of the communication configuration or the neural network architecture configuration is merely an example for understanding, and may further include other content. For example, the communication configuration may further include creating a communication topology and creating a service topology. The neural network architecture configuration may also include, for example, scheduling of computing resources for computing load on a node (for example, how to properly allocate central processing unit (CPU) and/or GPU resources).

In a possible implementation, the first communication network parameter includes at least one of the following: a scheduling parameter or a communication mode.

For example, the scheduling parameter may be a proportion of time in which a central node (a network device) serves a distributed node (a terminal device), a proportion of occupying entire spectrum resources by a distributed node, or a proportion of power of a central node for serving a distributed node.

For example, the communication mode may be one of coordinated multipoint processing (coordinated multipoint, CoMP) modes, including a joint processing (joint processing, JP)-CoMP mode or a coordinated beamforming (coordinated beamforming, CB)-CoMP mode.

In a possible implementation, the first neural network parameter includes at least one of the following: a quantity of layers of the neural network architecture, an operation corresponding to each of the layers of the neural network architecture, or a weight value of a neural network corresponding to the neural network architecture.

According to a second aspect, a communication method is provided, including: A first distributed node sends a first indication parameter, where the first indication parameter indicates a communication capability and a computing capability of the first distributed node; the first distributed node receives a first network parameter, where the first network parameter indicates at least one of a communication configuration or a neural network architecture configuration of the first distributed node; and the first distributed node determines at least one of the communication configuration or the neural network architecture configuration based on the first network parameter.

In a possible implementation, the first indication parameter further indicates a service characteristic of the first distributed node.

In a possible implementation, the method further includes: The first distributed node receives a first training parameter, where the first training parameter indicates a training order in which the first distributed node trains a neural network.

In a possible implementation, the first indication parameter includes first communication capability information, first computing capability information, and first service characteristic information. The first communication capability information indicates the communication capability of the first distributed node, the first computing capability information indicates the computing capability of the first distributed node, and the first service characteristic information indicates the service characteristic of the first distributed node.

In a possible implementation, the first indication parameter includes second communication capability information, second computing capability information, and second service characteristic information. The second communication capability information indicates a communication capability of a second distributed node, the second computing capability information indicates a computing capability of the second distributed node, and the second service characteristic information indicates a service characteristic of the second distributed node, where the second distributed node is a distributed node having a connection relationship with the first distributed node.

In a possible implementation, the first communication capability information includes at least one of the following: channel characteristic information or communication resource information of a channel between a central node and the first distributed node.

In a possible implementation, the first communication capability information includes at least one of the following: channel characteristic information or communication resource information of a channel between a second distributed node and the first distributed node, and the second distributed node is a distributed node having a connection relationship with the first distributed node.

Optionally, the first communication capability information includes channel characteristic information or communication resource information between the first distributed node and a node having a connection relationship with the first distributed node. The node may be the central node, or may be the second distributed node.

In a possible implementation, the channel characteristic information includes at least one of the following: channel state information, a signal-to-noise ratio, link quality, or a location of the first distributed node.

In a possible implementation, the first network parameter includes a first communication network parameter and a first neural network parameter. The first communication network parameter indicates the communication configuration of the first distributed node, and the first neural network parameter indicates the neural network architecture configuration of the first distributed node.

In a possible implementation, the first communication network parameter includes at least one of the following: a scheduling parameter or a communication mode.

In a possible implementation, the first neural network parameter includes at least one of the following: a quantity of layers of the neural network architecture, an operation corresponding to each of the layers of the neural network architecture, or a weight value of a neural network corresponding to the neural network architecture.

In a possible implementation, that a first distributed node sends a first indication parameter includes: The first distributed node sends the first indication parameter to the central node; or the first distributed node sends the first indication parameter to a second distributed node, where the second distributed node is a distributed node having a connection relationship with the first distributed node.

According to a third aspect, an embodiment of this application further provides a communication apparatus. The communication apparatus may be used as the central node in the first aspect. The communication apparatus may be the central node, an apparatus (for example, a chip, a chip system, or a circuit) in the central node, or an apparatus that can be used together with the central node.

In a possible implementation, the communication apparatus may include modules or units that are in a one-to-one correspondence with the methods/operations/steps/actions described in the first aspect. The module or unit may be a hardware circuit or software, or may be implemented as a hardware circuit in combination with software.

In a possible implementation, the communication apparatus includes: a transceiver unit, configured to obtain N indication parameters that are in a one-to-one correspondence with N distributed nodes, where a first indication parameter in the N indication parameters indicates a communication capability and a computing capability of a first distributed node, and the first distributed node is any distributed node in the N distributed nodes; and a processing unit, configured to determine M network parameters based on the N indication parameters, where the M network parameters are in a one-to-one correspondence with M distributed nodes in the N distributed nodes, and a first network parameter in the M network parameters indicates at least one of a communication configuration or a neural network architecture configuration of the first distributed node. The transceiver unit is further configured to send the M network parameters, where N and M are positive integers, and M is less than or equal to N.

In a possible implementation, the first indication parameter further indicates a service characteristic of the first distributed node.

In a possible implementation, the N indication parameters are further used to determine training parameters corresponding to the M distributed nodes, the training parameters include a first training parameter, and the first training parameter indicates a training order in which the first distributed node trains a neural network.

In a possible implementation, the transceiver unit is further configured to send the training parameters.

Optionally, the training parameter is included in broadcast information, the broadcast information includes a training parameter corresponding to each of the M distributed nodes, and the transceiver unit is configured to send the broadcast information to the M distributed nodes.

Optionally, the training parameter is included in unicast information, the unicast message includes a training parameter of one distributed node, and the transceiver unit is configured to send corresponding unicast information to each of the M distributed nodes.

Optionally, the transceiver unit is configured to send the training parameter to each distributed node. For example, the central node sends, to the first distributed node, a training parameter corresponding to the first distributed node, and sends, to a second distributed node, a training parameter corresponding to the second distributed node.

Optionally, the transceiver unit is configured to send the training parameter to a part of the M distributed nodes. For example, the central node sends, to the first distributed node, the training parameter corresponding to the first distributed node and the training parameter corresponding to the second distributed node.

In a possible implementation, the first indication parameter includes first communication capability information, first computing capability information, and first service characteristic information. The first communication capability information indicates the communication capability of the first distributed node, the first computing capability information indicates the computing capability of the first distributed node, and the first service characteristic information indicates the service characteristic of the first distributed node.

In a possible implementation, the first indication parameter further includes second communication capability information, second computing capability information, and second service characteristic information. The second communication capability information indicates a communication capability of the second distributed node, the second computing capability information indicates a computing capability of the second distributed node, and the second service characteristic information indicates a service characteristic of the second distributed node, where the second distributed node is a distributed node having a connection relationship with the first distributed node.

In a possible implementation, the first communication capability information includes at least one of the following: channel characteristic information or communication resource information of a channel between the communication apparatus and the first distributed node.

In a possible implementation, the first communication capability information includes at least one of the following: channel characteristic information or communication resource information of a channel between a second distributed node and the first distributed node, and the second distributed node is a distributed node having a connection relationship with the first distributed node.

In a possible implementation, the channel characteristic information includes at least one of the following: channel state information, a signal-to-noise ratio, link quality, or a location of the first distributed node.

In a possible implementation, the first network parameter includes a first communication network parameter and a first neural network parameter. The first communication network parameter indicates the communication configuration of the first distributed node, and the first neural network parameter indicates the neural network architecture configuration of the first distributed node.

In a possible implementation, the first communication network parameter includes at least one of the following: a scheduling parameter or a communication mode.

In a possible implementation, the first neural network parameter includes at least one of the following: a quantity of layers of the neural network architecture, an operation corresponding to each of the layers of the neural network architecture, or a weight value of a neural network corresponding to the neural network architecture.

According to a fourth aspect, an embodiment of this application further provides a communication apparatus. The communication apparatus may be used as the distributed node in the second aspect. The communication apparatus may be the distributed node, an apparatus (for example, a chip, a chip system, or a circuit) in the distributed node, or an apparatus that can be used together with the distributed node.

In a possible implementation, the communication apparatus may include modules or units that are in a one-to-one correspondence with the methods/operations/steps/actions described in the second aspect. The module or unit may be a hardware circuit or software, or may be implemented as a hardware circuit in combination with software.

In a possible implementation, the communication apparatus includes: a transceiver unit, configured to send a first indication parameter, where the first indication parameter indicates a communication capability and a computing capability of the communication apparatus, and the transceiver unit is further configured to receive a first network parameter, where the first network parameter indicates at least one of a communication configuration or a neural network architecture configuration of the communication apparatus; and a processing unit, configured to determine at least one of the communication configuration or the neural network architecture configuration based on the first network parameter.

In a possible implementation, the first indication parameter further indicates a service characteristic of the communication apparatus.

In a possible implementation, the transceiver unit is further configured to receive a first training parameter, where the first training parameter indicates a training order in which the communication apparatus trains a neural network.

In a possible implementation, the first indication parameter includes first communication capability information, first computing capability information, and first service characteristic information. The first communication capability information indicates a communication capability of the communication apparatus, the first computing capability information indicates the computing capability of the communication apparatus, and the first service characteristic information indicates the service characteristic of the communication apparatus.

In a possible implementation, the first indication parameter further includes second communication capability information, second computing capability information, and second service characteristic information. The second communication capability information indicates a communication capability of a second distributed node, the second computing capability information indicates a computing capability of the second distributed node, and the second service characteristic information indicates a service characteristic of the second distributed node, where the second distributed node is a distributed node having a connection relationship with the communication apparatus.

In a possible implementation, the first communication capability information includes at least one of the following: channel characteristic information or communication resource information of a channel between a central node and the communication apparatus.

In a possible implementation, the first communication capability information includes at least one of the following: channel characteristic information or communication resource information of a channel between a second distributed node and the communication apparatus, and the second distributed node is a distributed node having a connection relationship with the communication apparatus.

In a possible implementation, the channel characteristic information includes at least one of the following: channel state information, a signal-to-noise ratio, link quality, or a location of the communication apparatus.

In a possible implementation, the first network parameter includes a first communication network parameter and a first neural network parameter. The first communication network parameter indicates the communication configuration of the communication apparatus, and the first neural network parameter indicates the neural network architecture configuration of the communication apparatus.

In a possible implementation, the first communication network parameter includes at least one of the following: a scheduling parameter or a communication mode.

In a possible implementation, the first neural network parameter includes at least one of the following: a quantity of layers of the neural network architecture, an operation corresponding to each of the layers of the neural network architecture, or a weight value of a neural network corresponding to the neural network architecture.

In a possible implementation, the transceiver unit is configured to send the first indication parameter to the central node; or the transceiver unit is configured to send the first indication parameter to a second distributed node, where the second distributed node is a distributed node having a connection relationship with the communication apparatus.

According to a fifth aspect, a communication apparatus is provided, including a processor. The processor is coupled to a memory, and the processor is configured to execute a computer program or instructions, causing the communication apparatus to perform the method according to any one of the first aspect or the possible implementations of the first aspect, or causing the communication apparatus to perform the method according to any one of the second aspect or the possible implementations of the second aspect.

In a possible implementation, the processor and the memory are integrated together.

In another possible implementation, the memory is located outside the communication apparatus.

The communication apparatus further includes a communication interface. The communication interface is for communication between the communication apparatus and another device, for example, for data and/or signal sending or receiving.

For example, the communication interface may be a transceiver, a circuit, a bus, a module, or a communication interface of another type.

According to a sixth aspect, a communication apparatus is provided, including a logic circuit and an input/output interface. The input/output interface is configured to obtain N indication parameters that are in a one-to-one correspondence with N distributed nodes, a first indication parameter in the N indication parameters indicates a communication capability and a computing capability of a first distributed node, and the first distributed node is any distributed node in the N distributed nodes. The logic circuit is configured to determine M network parameters based on the N indication parameters, where the M network parameters are in a one-to-one correspondence with M distributed nodes in the N distributed nodes, and a first network parameter in the M network parameters indicates at least one of a communication configuration or a neural network architecture configuration of the first distributed node. The input/output interface is further configured to send the M network parameters, where N and M are positive integers, and M is less than or equal to N.

In a possible implementation, the logic circuit is configured to execute a computer program or instructions, causing the communication apparatus to perform the method according to any possible implementation of the first aspect.

According to a seventh aspect, a communication apparatus is provided, including a logic circuit and an input/output interface. The input/output interface is configured to send a first indication parameter, and the first indication parameter indicates a communication capability and a computing capability of the communication apparatus. The input/output interface is further configured to receive a first network parameter, the first network parameter indicates at least one of a communication configuration or a neural network architecture configuration of the communication apparatus, and the logic circuit is configured to determine at least one of the communication configuration or the neural network architecture configuration based on the first network parameter.

In a possible implementation, the logic circuit is configured to execute a computer program or instructions, causing the communication apparatus to perform the method according to any possible implementation of the second aspect.

According to an eighth aspect, a computer-readable storage medium is provided, including a computer program or instructions. When the computer program or the instruction is/are on a computer, the computer is caused to perform the method according to any one of the first aspect or the possible implementations of the first aspect, or the computer is caused to perform the method according to any one of the second aspect or the possible implementations of the second aspect.

According to a ninth aspect, a computer program product is provided, including instructions. When the instructions are run on a computer, the computer is caused to perform the method according to any one of the first aspect or the possible implementations of the first aspect, or the computer is caused to perform the method according to any one of the second aspect or the possible implementations of the second aspect.

## BRIEF DESCRIPTION OF DRAWINGS

FIG. 1 is a diagram of an architecture of a communication system to which an embodiment of this application is applicable;

FIG. 2 is a diagram of neural network architecture search;

FIG. 3 is a diagram of performing neural network architecture search in a communication network;

FIG. 4 is an interaction diagram of a communication method according to an embodiment of this application;

FIG. 5 is an interaction diagram of a communication method according to an embodiment of this application;

FIG. 6 is an interaction diagram of another communication method according to an embodiment of this application;

FIG. 7 is an interaction diagram of still another communication method according to an embodiment of this application;

FIG. 8 is a block diagram of a communication apparatus according to an embodiment of this application;

FIG. 9 is another block diagram of a communication apparatus 900 according to an embodiment of this application; and

FIG. 10 is still another block diagram of a communication apparatus 1000 according to an embodiment of this application.

## DESCRIPTION OF EMBODIMENTS

Technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) communication system, a new radio (new radio, NR) system, a wireless fidelity (wireless fidelity, Wi-Fi) system, a communication system that supports convergence of a plurality of wireless technologies, and a 6th generation (6th generation, 6G) communication system evolved after 5G.

The technical solutions in embodiments of this application may be further applied to communication systems such as a wireless cellular communication system, a wireless mesh (Mesh) network, and a satellite communication system. When the wireless cellular communication system includes one cellular base station and a plurality of terminal devices, the plurality of terminal devices may assist the cellular base station in artificial intelligence (artificial intelligence, AI) model computing. When the wireless cellular communication system includes a plurality of cellular base stations and one terminal device, the plurality of cellular base stations may assist the terminal device in AI model computing. A wireless mesh network includes a cellular macro base station, a micro base station, and a terminal device. The cellular macro base station transmits downlink data to the terminal device via a plurality of micro base stations that serve as relays. The satellite communication system includes a satellite base station and a terminal device.

A terminal in embodiments of this application may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. Alternatively, the terminal device may be a satellite phone, a cellular phone, a smartphone, a wireless data card, a wireless modem, a machine type communication device, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a communication device carried on a high-altitude aircraft, a wearable device, an uncrewed aerial vehicle, a robot, a terminal in device-to-device (device-to-device, D2D) communication, a terminal in vehicle-to-everything (vehicle to everything, V2X), a virtual reality (virtual reality, VR) terminal device, an augmented reality (augmented reality, AR) terminal device, a wireless terminal in industrial control (industrial control), a wireless terminal in self-driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a communication network evolved after 5G, or the like. This is not limited in this application.

In embodiments of this application, an apparatus configured to implement a function of the terminal device may be a terminal device, or may be an apparatus that can support the terminal device in implementing the function, for example, a chip system. The apparatus may be mounted in a terminal device or used together with a terminal device. In embodiments of this application, the chip system may include a chip, or may include a chip and another discrete component.

A network device in embodiments of this application is a device having a wireless transceiver function, and is configured to communicate with a terminal device. An access network device may be a node in a radio access network (radio access network, RAN), or may be referred to as a base station, or may be referred to as a RAN node. The access network device may be an evolved NodeB (evolved Node B, eNB, or eNodeB) in LTE, or may be a base station in a 5G network like a gNodeB (gNB), a base station in a public land mobile network (public land mobile network, PLMN) evolved after 5G, a broadband network gateway (broadband network gateway, BNG), an aggregation switch, a non-3rd Generation Partnership Project (3rd generation partnership project, 3GPP) access device, or the like. Optionally, the network device in embodiments of this application may include base stations in various forms, for example, a macro base station, a micro base station (also referred to as a small cell), a relay station, an access node in a Wi-Fi system, a transmission reception point (transmission reception point, TRP), a transmission point (transmission point, TP), a mobile switching center, a device in device-to-device (device-to-device, D2D), vehicle-to-everything (vehicle-to-everything, V2X), and machine-to-machine (machine-to-machine, M2M) communication that implements a function of a base station, and the like. The network device may further include a central unit (central unit, CU) and a distributed unit (distributed unit, DU) in a cloud access network (cloud radio access network, C-RAN) system, and a network device in an NTN communication system. This is not specifically limited in embodiments of this application.

In embodiments of this application, an apparatus configured to implement a function of the network device may be a network device, or may be an apparatus that can support the network device in implementing the function, for example, a chip system. The apparatus may be mounted in a network device or used together with a network device. In embodiments of this application, the chip system may include a chip, or may include a chip and another discrete component.

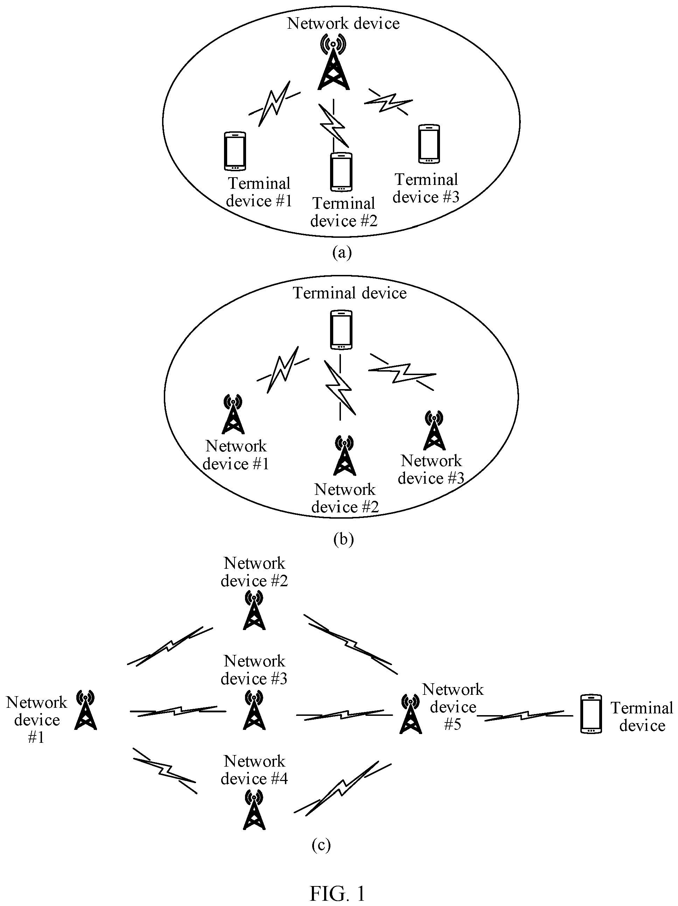

FIG. 1 is a diagram of an architecture of a communication system to which an embodiment of this application is applicable. The communication system shown in FIG. 1a is a wireless cellular network. For example, the communication system shown in FIG. 1a includes devices such as a network device, a terminal device #1, a terminal device #2, and a terminal device #3. The communication system shown in FIG. 1b is a dense cellular network, that is, a cellular network in which a plurality of network devices coordinate. For example, the communication system shown in FIG. 1b includes devices such as a network device #1, a network device #2, a network device #3, and a terminal device. The communication system shown in FIG. 1c is a wireless cellular multi-hop mesh cellular network. For example, the communication system shown in FIG. 1c includes devices such as a network device #1, a network device #2, a network device #3, a network device #4, a network device #5, and a terminal device #1. Content shown in FIG. 1 is merely used as an example for understanding, and does not finally limit the protection scope claimed in embodiments of this application.

The following briefly describes terms related to the technical solutions disclosed in embodiments of this application.

(1) Neural network

A neural network (neural network, NN) may include neurons. The neuron may be an operation unit with $x_s$ being an input, and an output of the operation unit may be:

$$h_{W,b}(x) = f(W^T x) = f(\sum_{s=1}^{n} W_s x_s + b) \qquad (1\text{-}1)$$

s=1, 2, ..., or n, n is a natural number greater than 1, $W_s$ is a weight of $x_s$, and b is a bias of the neuron. f is an activation function (activation function) of the neuron, and is used to introduce a non-linear characteristic into the neural network, to convert an input signal in the neuron into an output signal. An output signal of the activation function may be used as an input of a next layer.

The NN is a network formed by connecting a plurality of single neurons, that is, an output of a neuron may be an input of another neuron. An input of each neuron may be connected to a local receptive field of a previous layer, to extract a feature of the local receptive field, and the local receptive field may be a region including several neurons.

(2) Deep neural network

A deep neural network (deep neural network, DNN), also referred to as a multi-layer neural network, may be understood as a neural network having a plurality of hidden layers. The DNN is divided based on locations of different layers, and the neural network in the DNN may be classified into three types: an input layer, a hidden layer, and an output layer. Generally, the first layer is the input layer, the last layer is the output layer, and a middle layer is the hidden layer. Layers are fully connected. To be specific, any neuron at an $i^{th}$ layer is necessarily connected to any neuron at an $(i+1)^{th}$ layer.

Work of each layer of the DNN may be represented by using a linear relationship expression: $\vec{y} = \alpha(W\vec{x} + \vec{b})$,

where $\vec{x}$ is an input vector, $\vec{y}$ is an output vector, $\vec{b}$ is an offset vector, W is a weight matrix (also referred to as a coefficient), and $\alpha()$ is an activation function. Because the DNN has a plurality of layers, there are a plurality of coefficients W and a plurality of offset vectors $\vec{b}$. Definitions of these parameters in the DNN are as follows: The coefficient W is used as an example. It is assumed that in a DNN having three layers, a linear coefficient from a 4th neuron at a second layer to a 2nd neuron at a third layer is defined as $W_{24}^{3}$. The superscript 3 represents a layer at which the coefficient W is located, and the subscript corresponds to an index 2 at the third layer as an output and an index 4 at the second layer as an input.

In conclusion, a coefficient from a kth neuron at an (L-1)th layer to a jth neuron at an Lth layer is defined as $W_{jk}^{L}$.

In the deep neural network, more hidden layers make the network more capable of describing a complex case in the real world. Theoretically, a model with more parameters has higher complexity and a larger "capacity". This indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

(3) Neural network architecture search.

Neural network architecture search (neural architecture search, NAS) is a process of designing, in an automated manner, a neural network architecture that can achieve optimal performance with limited computing resources.

Specifically, neural network architecture search is related to the following three parameters:

1) search space;
2) search policy; and
3) performance evaluation policy.

The search space defines a neural network architecture that can be expressed theoretically. The search policy is used to explore defined search space and determine a neural network architecture with excellent performance. A neural network architecture with excellent performance needs to be found quickly by using the search policy while premature convergence to a suboptimal neural network architecture area is avoided. The performance evaluation policy is used to evaluate performance of a neural network architecture determined by using the search policy in the search space, and feed back a performance evaluation result to the search policy, to guide a next search process of the search policy. In this way, neural network architecture search can achieve an objective of finding a neural network architecture that implements high prediction performance for invisible data.

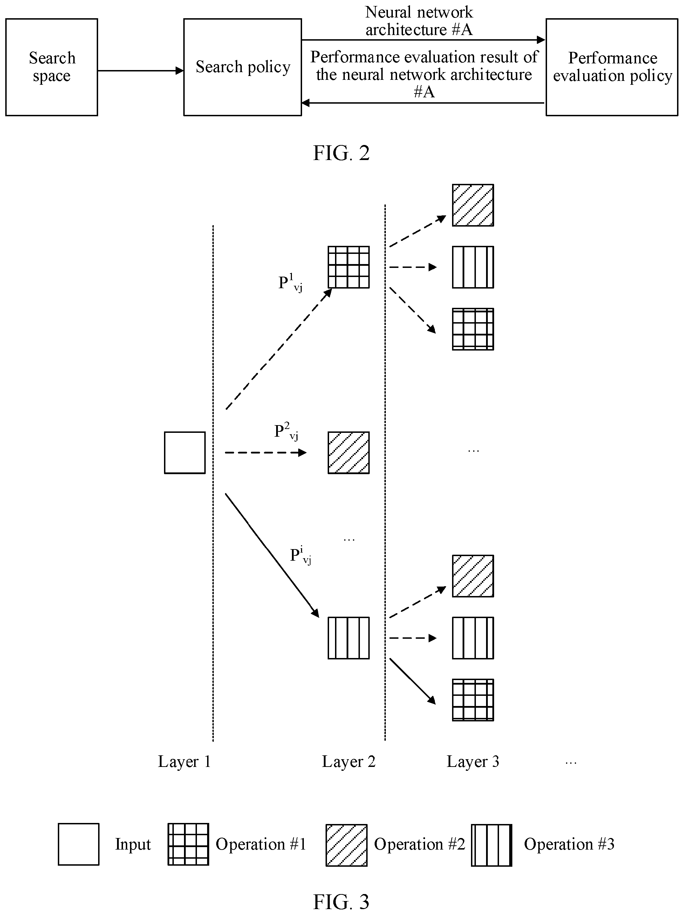

FIG. 2 is a diagram of neural network architecture search. As shown in FIG. 2, a neural network architecture #A is determined in search space by using a search policy, performance of the neural network architecture #A is evaluated by using a performance evaluation policy, and a performance evaluation result of the neural network architecture #A is fed back to the search policy, to find a neural network architecture that has better performance and that can meet a preset performance requirement in the search space next time by using the search policy. The neural network architecture search shown in FIG. 2 is a process of constant iteration, until a neural network architecture that can meet a preset performance requirement is found.

In a communication network, a distributed node (which may be understood as an edge node) has a specific computing capability, and can process local data. This provides computing capability support for application of an AI algorithm in the communication network. However, mismatching between a communication resource and a computing resource of the distributed node becomes a bottleneck of communication-enabled AI application. For example, a distributed node (for example, a terminal) can process a local AI application, but limited computing resources of the distributed node cause a high computing latency of the distributed node. A central node (for example, a network device) has abundant computing resources, but a communication transmission latency from the central node to the distributed node is high. In addition, a communication topology structure of the communication network can form search space for neural network architecture search (for example, a chain structure and a multi-branch structure). Therefore, neural network architecture search may be performed in the communication network, to implement appropriate allocation of computing resources and communication resources between a distributed node and a central node.

In a communication network, designing search space for neural network architecture search is related to two parameters:

#1) a quantity of layers of a node, that is, a maximum quantity of layers of an NN (which may also be understood as a neural network architecture) that can be processed by the node is dynamically adjusted based on existing resources (including a computing resource and a communication resource) of the node; and
#2) an operation at each layer of the node and a related hyperparameter (hyperparameters), where for a given service (for example, image recognition), common operations include convolution (convolution), pooling (pooling), and the like, and related hyperparameters include a convolution kernel size (convolution kernel size) and a quantity of channels.

FIG. 3 is a diagram of performing neural network architecture search in a communication network. As shown in FIG. 3, a set of operations that can be selected at a $j^{th}$ layer of a node $v$ (the node $v$ is any node in the communication network) is $\{o_{vj}^i\}$, and a probability that each operation $o_{vj}^i$ is selected is $p_{vj}^i$. A total average computing latency of the node $v$ may be expressed as:

$$\mathbb{E}\left[\text{latency}_v^{comp.}\right] = \sum_{i \in I, j \in J} p_{vj}^i \times F(o_{vj}^i) \tag{1}$$

$F(o_{vj}^i)$ is a predicted latency of performing an operation at the $j^{th}$ layer by the node $v$. For the node $v$, a communication transmission latency from the node $v$ to a next node $v + 1$ may be denoted as $\varepsilon_v$. A total latency of the node $v$ may be expressed as:

$$\mathbb{E}[\text{latency}_v] = \mathbb{E}\left[\text{latency}_v^{comp.}\right] + \varepsilon_v \tag{2}$$

The predicted latency $F(o_{vj}^i)$ in Formula (1) and the communication transmission latency $\varepsilon_v$ in Formula (2) may be determined by using historical information. Therefore, $F(o_{vj}^i)$ and $\varepsilon_v$ may be considered as two known parameters.

FIG. 3 shows several different operations, for example, an operation #1, an operation #2, an operation #3, and the like, but this content is only understood as an example.

In FIG. 3, the communication transmission latency and the computing latency of the node are considered in the design of a search policy for the neural network architecture search, but the communication transmission latency and the computing latency are determined in advance, leading to a failure of adapting to a variable communication environment.

Specifically, the technology shown in FIG. 3 considers a communication network of a chain structure (the chain structure refers to a structure in which information data is transmitted in a single line in sequence), but does not consider impact of link scheduling in the communication network on performing neural network architecture search in the communication network. In other words, in the technology shown in FIG. 3, a communication network is matched by optimizing (adjusting) a neural network architecture, and a topology structure and a communication resource of the communication network are not optimized.

Specifically, in the technology shown in FIG. 3, a neural network operation at each layer of the node is optimized to adapt to a communication capability and a computing capability that are given by the node. For example, when communication resources and computing resources are sufficient, the node may choose to perform a more complex function. When communication resources and computing resources are insufficient, the node may choose to perform a simpler function.

In addition, the technology shown in FIG. 3 does not consider impact of a communication mode on search space for the neural network architecture search, and the search space directly affects a selection range of neural network operations of each node. The communication mode is affected by the variable communication environment. For example, in a communication environment with a good channel condition, a plurality of network devices serving a same terminal device use a beamforming-coordinated multipoint transmission/reception communication mode, indicating that different network devices may select different neural network operations. In a communication environment with a poor channel condition, a plurality of network devices serving a same terminal device use a joint processing-coordinated multipoint transmission/reception communication mode, indicating that different network devices select a same neural network operation. Therefore, different communication modes affect neural network architecture search in the communication network.

In conclusion, in the technology shown in FIG. 3, impact of a variable communication environment on neural network architecture search in a communication network is not considered. For example, mutual impact between link scheduling and neural network architecture selection during multi-node coordinated communication is not considered.

For another example, impact of different communication modes on neural network architecture search in a communication network is not considered. Therefore, an existing technology of neural network architecture search in a communication network cannot be properly applied to a variable communication environment.

In view of the foregoing technical problem, embodiments of this application provide a communication method and a communication apparatus, so that neural network architecture search may be performed in a variable communication environment, and a neural network architecture determined through the neural network architecture search in the variable communication environment can meet requirements of a node for a neural network (AI model) with a low latency and high model accuracy.

The following describes communication methods according to embodiments of this application with reference to the accompanying drawings.

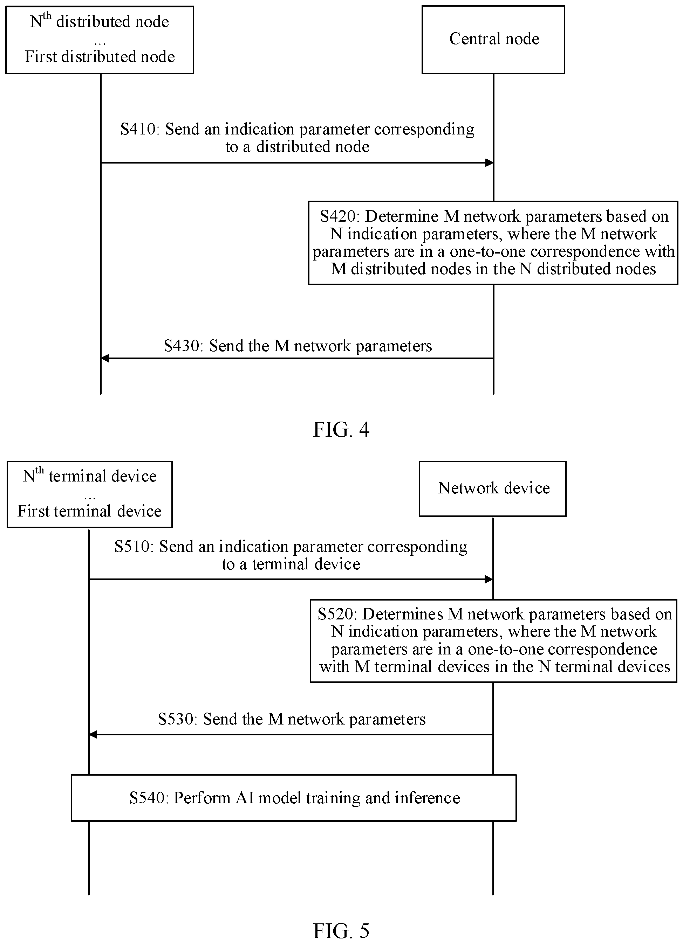

FIG. 4 is an interaction diagram of a communication method according to an embodiment of this application. The method includes the following steps.

S410: A distributed node sends an indication parameter of the distributed node to a central node.

Correspondingly, the central node receives the indication parameter of the distributed node.

Specifically, N distributed nodes send, to the central node, N indication parameters that are in a one-to-one correspondence with the N distributed nodes, and the central node receives the N indication parameters that are in the one-to-one correspondence with the N distributed nodes, where N is a positive integer.

All distributed nodes in the N distributed nodes may be of a same type or different types. For example, the N distributed nodes include a plurality of terminal devices and a plurality of network devices; or all the distributed nodes in the N distributed nodes are network devices or terminal devices. The distributed node and the central node may be of a same type or different types. For example, when the N distributed nodes are all terminal devices, the central node may be a terminal device or a network device. When the N distributed nodes are all network devices, the central node may be a terminal device or a network device. When the N distributed nodes include a plurality of terminal devices and a plurality of network devices, the central node may be a terminal device or a network device.

That N distributed nodes send, to the central node, N indication parameters that are in a one-to-one correspondence with the N distributed nodes may be understood as that each distributed node sends an indication parameter to the central node, or may be understood as that a first part of the N distributed nodes do not send indication parameters to the central node, but the indication parameters corresponding to the first part of the distributed nodes are included in indication parameters sent by a second part of the N distributed nodes to the central node.

In other words, the indication parameters sent by the second part of the distributed nodes to the central node further include the indication parameters corresponding to the first part of the distributed nodes. For example, a distributed node #S has a connection relationship with a distributed node #D (refer to the network device #5 and the network device #2 in FIG. 1c). The distributed node #S may send an indication parameter #S of the distributed node #S to the distributed node #D, and the distributed node #D sends the indication parameter #S of the distributed node #S and an indication parameter #D of the distributed node #D to the central node.

One distributed node corresponds to one indication parameter. For example, a first distributed node corresponds to a first indication parameter, and an $N^{th}$ distributed node corresponds to an $N^{th}$ indication parameter. The first indication parameter indicates a communication capability and a computing capability of the first distributed node, and the $N^{th}$ indication parameter indicates a communication capability and a computing capability of the $N^{th}$ distributed node. The first distributed node is any distributed node in the N distributed nodes, the first indication parameter is any indication parameter in the N indication parameters, and the first distributed node corresponds to the first indication parameter. The following describes a specific distributed node and an indication parameter by using the first distributed node and the first indication parameter as an example.

The first indication parameter includes first communication capability information and first computing capability information. The first communication capability information indicates the communication capability of the first distributed node, and the first computing capability information indicates the computing capability of the first distributed node.

The communication capability of the first distributed node may be understood as a transmission rate of information data of the first distributed node, which is related to a communication resource occupied by the first distributed node and a channel condition, or is related to an antenna carried on the first distributed node.

In a possible implementation, the first communication capability information includes at least one of the following: channel characteristic information or communication resource information of a channel between the central node and the first distributed node. The channel characteristic information or the communication resource information indicates the communication capability of the first distributed node.

The channel characteristic information includes at least one of the following: channel state information (channel state information, CSI), a signal-to-noise ratio (signal-to-noise ratio, SNR), link quality, or a location of the first distributed node. The central node may determine the channel condition of the first distributed node based on information such as the CSI, the SNR, or the location of the first distributed node.

For example, when the SNR of the first distributed node is small (for example, the SNR is 0 dB), channel noise is large, the channel condition is poor, and the communication capability of the first distributed node is poor.

For another example, the location of the distributed node also affects the communication capability of the distributed node. For example, a distributed node at a cell edge is subject to a weak signal and strong interference, and the communication capability of the first distributed node is weak.

For another example, when the link quality of the first distributed node is poor, a packet loss rate is high, causing data retransmission and increased energy consumption, and the communication capability of the first distributed node is weak.

The communication resource information includes at least one of the following: time domain resource information, frequency domain resource information, or space domain resource information between the first distributed node and the central node. The central node may determine the communication capability of the first distributed node based on information such as the time domain resource information, the frequency domain resource information, or the space domain resource information.

For example, when the first distributed node occupies a large quantity of spectrum resources, the transmission rate of the first distributed node is high, and the communication capability of the first distributed node is strong.

In a possible implementation, the first communication capability information includes at least one of the following: channel characteristic information or communication resource information of a channel between a second distributed node and the first distributed node.

Content included in the first communication capability information reported by the first distributed node to the central node is channel characteristic information or communication resource information between the first distributed node and a node having a connection relationship with the first distributed node. The node may be a distributed node (for example, the second distributed node), or may be the central node. This is not specifically limited in this embodiment of this application. This description is also applicable to the following, and details are not described herein again.

The computing capability of the first distributed node may be understood as a capability of the first distributed node to process, train, or infer a neural network architecture, and is related to a condition of hardware such as a CPU and/or a GPU.

For example, the first computing capability information includes at least one of the following: a processor capability, processor load, or another parameter used to represent a computing capability of a distributed node.

In a possible implementation, the first communication capability information may further include channel characteristic information or communication resource information between the first distributed node and a second distributed node or between a second distributed node and the central node. The second distributed node is a distributed node having a connection relationship with the first distributed node (refer to the network device #2 and the network device #5 in FIG. 1c, the first distributed node is the network device #2, and the second distributed node is the network device #5).

In a possible implementation, the first computing capability information may further include second computing capability information of the second distributed node (refer to the network device #2 and the network device #5 in FIG. 1c, the first distributed node is the network device #2, and the second distributed node is the network device #5). In other words, the first indication parameter includes second communication capability information and second computing capability information.

The communication capability information is used by the central node to determine a communication capability of a distributed node, so that the central node determines specific allocation of a communication resource for the distributed node. The computing capability information is used by the central node to determine a computing capability of a distributed node, so that the central node determines information such as a quantity of layers of a neural network architecture allocated to the distributed node and/or an operation corresponding to each of the layers of the neural network architecture.

The communication capability affects communication link and resource scheduling between nodes, and the computing capability affects selection of a neural network operation of a node. By jointly considering the communication capability and the computing capability of the distributed node, in this embodiment of this application, proper application of and efficient matching between the communication resource and the computing resource can be implemented.

S420: The central node determines M network parameters based on the N indication parameters, where the M network parameters are in a one-to-one correspondence with M distributed nodes in the N distributed nodes.

One network parameter corresponds to one distributed node. For example, a first network parameter corresponds to the first distributed node, and an $M^{th}$ network parameter corresponds to an $M^{th}$ distributed node. The first network parameter indicates a communication configuration of the first distributed node; or the first network parameter indicates a neural network architecture configuration of the first distributed node; or the first network parameter indicates a communication configuration of the first distributed node and a neural network architecture configuration of the first distributed node.

In an example, the network parameter includes a communication network parameter and a neural network parameter. For example, the first network parameter includes a first communication network parameter and a first neural network parameter. The first communication network parameter indicates the communication configuration of the first distributed node, and the first neural network parameter indicates the neural network architecture configuration of the first distributed node. The central node determines M communication network parameters and M neural network parameters based on the N indication parameters. The neural network parameter and the communication network parameter are coupled to each other, and jointly affect model accuracy and a total latency of performing training or inference by a communication network on a neural network architecture (which may be understood as an AI model, and is described as an AI model in the following). Further descriptions are made below.

For example, in time division multiplexing, the communication configuration may be a proportion of time in which a central node (a network device) serves a distributed node (a terminal device). In frequency division multiplexing scenarios, the communication configuration may be a proportion of occupying entire spectrum resources by a distributed node. In coordinated multipoint transmission/reception, the communication configuration may be that a distributed node (a network device) and a neighboring distributed node (a network device) are in a joint processing (joint processing, JP)-coordinated multipoint transmission/reception (coordinated multipoint, CoMP) mode or a coordinated beamforming (coordinated beamforming, CB)-CoMP mode. In a coding and modulation mode, the communication configuration is a selected MCS order. In resource scheduling, the communication configuration is a transmit power allocation scheme used when a central node serves different nodes, and the like.

For example, the neural network architecture configuration may be understood as a quantity of layers of a neural network architecture a distributed node can process, a specific operation at each layer of a neural network architecture a distributed node can process, a weight of a neural network corresponding to a neural network architecture (the weight of the neural network may be understood as a specific value of an operation at each layer), or the like.

The foregoing description of the communication configuration or the neural network architecture configuration is merely an example for understanding, and may further include other content. For example, the communication configuration may further include creating a communication topology and creating a service topology. The neural network architecture configuration may also include, for example, scheduling of computing resources for computing load on a node (for example, how to properly allocate GPU and CPU resources).

The central node determines the M network parameters by comprehensively processing the N indication parameters, where the network parameter indicates the communication configuration and/or the neural network architecture configuration of the distributed node. Specifically, the central node determines, based on the communication capability information and the computing capability information of the distributed node in the N indication parameters, the M distributed nodes that are in the N distributed nodes and that actually participate in AI model training, configures the network parameter for each of the M distributed nodes, and indicates the communication configuration and/or the neural network architecture configuration of the distributed node by using the network parameter.

In a possible implementation, the central node constructs an objective function based on the N indication parameters, and updates and iterates the objective function to determine the M network parameters. The objective function comprehensively considers impact of a communication capability and a computing capability of a distributed node on performing neural network architecture search in a communication network, so that a neural network architecture determined through the neural network architecture search in a specific communication environment can meet requirements of a node for a neural network with a low latency and high model accuracy The objective of the objective function is to improve model accuracy and reduce a processing latency. Further descriptions are made below.

M is less than or equal to N, indicating that a part of the N distributed nodes may participate in AI model training, and a remaining distributed node does not need to participate in AI model training because a communication capability and/or a computing capability of the distributed node do not meet a requirement. Alternatively, all distributed nodes may participate in AI model training in a scenario.

The M distributed nodes may be determined by the central node in a processing of updating and iterating the objective function, or may be determined by the central node in a process of preliminarily screening the N distributed nodes based on the communication capability and the computing capability of each distributed node. This is not limited in this embodiment of this application.

The determined M network parameters are used to indicate a neural network architecture determined through neural network architecture search in a variable communication network. The determined neural network architecture corresponds to a specific communication environment in which the communication network is located. The determined neural network architecture can meet requirements of a node for high model accuracy and a low latency of an AI model.

Different communication environments may correspond to different indication parameters, different indication parameters may correspond to different network parameters, and different network parameters may correspond to different neural network architectures. Therefore, the central node may determine the network parameter based on the indication parameter reported by the distributed node. The network parameter corresponds to the neural network architecture determined through the neural network architecture in the variable communication environment. The neural network architecture can meet requirements of a node for a neural network with a low latency and high model accuracy.

The network parameter is determined by comprehensively considering the communication capability and the computing capability of the distributed node, and the network parameter matches a specific communication environment. For example, communication capabilities of the distributed node are different in different communication environments.

The central node may determine, based on communication capabilities and computing capabilities that are reported by the distributed node and that correspond to different communication environments, network parameters that match a specific communication environment. The network parameters are used to determine a neural network architecture corresponding to the specific communication environment, and the neural network architecture can meet requirements of a node for a neural network with a low latency and high model accuracy.

S430: The central node sends the M network parameters.

That the central node sends the M network parameters may be understood as follows: The central node sends the network parameters to the M distributed nodes that are in the one-to-one correspondence with the M network parameters; or the central node sends the network parameters to a part of the M distributed nodes. For details, refer to the foregoing content about receiving the N indication parameters by the central node. Details are not described herein again.

After the network parameters are sent, the central node and the M distributed nodes jointly complete neural network training or inference based on the neural network architecture corresponding to the M network parameters. Further descriptions are made below.

According to the foregoing technical solution, in embodiments of this application, neural network architecture search may be performed in a communication network in a variable communication environment, and a neural network architecture determined through the neural network architecture search in the variable communication environment can meet requirements of a node for high model accuracy and a low latency of a neural network.

In a possible implementation, the first indication parameter further includes first service characteristic information. The first service characteristic information indicates a service characteristic of the first distributed node. The service characteristic may include at least one of a task type, a data type, and data distribution.

For example, the task type includes image recognition, natural language processing, and the like. The data type includes an integer type, a floating-point type, and the like. The data distribution refers to proportions of tasks of different types, and the like.

Optionally, the first indication parameter may further include second service characteristic information.

The central node may determine, based on the service characteristic information, a service type the distributed node can process, so that the neural network parameter of the distributed node can be further determined. For example, for a specific service type, the central node selects, based on a service characteristic of a distributed node, a distributed node and a communication link that are suitable for processing a service of such type (for example, a distributed node mounted with a GPU is suitable for processing a service of an image type), and a specific neural network operation type of the distributed node matches the service type. This improves resource utilization.

Generally, the communication capability is related to communication link and resource scheduling between nodes, the computing capability is related to selection of a neural network operation of a node, and the service characteristic is related to selection of a training order and an inference order of the neural network. The foregoing parameters affect each other, and may jointly affect determining of a network parameter.

For example, the communication capability of the first distributed node affects a neural network operation of the first distributed node. Specifically, if the communication capability of the first distributed node is weak and the computing capability is strong, the communication capability of the first distributed node affects a neural network operation the first distributed node can perform (when the communication capability of the first distributed node is weak, the node cannot perform an operation related to data dimension increase (dimension increase means that an amount of data increases, for example, input data has two dimensions, and output data becomes three dimensions, which means that an amount of data increases), avoiding transmission of a large amount of data). The service characteristic of the first distributed node affects a neural network operation of the first distributed node. Specifically, the service characteristic of the first distributed node matches a service type of an AI model to be processed by the communication network, and a neural network operation type of the first distributed node is related to the service type. In this embodiment of this application, a communication capability and a computing capability of a distributed node are jointly considered, and a network parameter corresponding to the distributed node is determined with reference to a service characteristic, so as to implement proper application of and efficient matching between a communication resource and a computing resource.

In a possible implementation, the N indication parameters are further used to determine training parameters corresponding to the M distributed nodes, the training parameters include a first training parameter, and the first training parameter indicates a training order in which the first distributed node trains a neural network or an inference order (the training order or the inference order may be understood as a topology of the neural network).

The central node determines the communication capability, the computing capability, and the service type of the distributed node based on the communication capability information, the computing capability information, and the service characteristic information that are reported by the distributed node, determines a topology structure (which may be understood as a training parameter) of the neural network, and then determines search space of the neural network architecture. Based on this, the central node calculates a communication transmission latency and a computing latency to obtain an objective function value, and finally obtains a network parameter of the entire network through constant iteration by using gradient backpropagation. In this way, in embodiments of this application, based on a communication link of an existing communication network, a sequence of neural network nodes may be adjusted, so that communication resources and computing resources of the nodes can be fully utilized, implementing efficient matching between the communication resources and the computing resources.

In a possible implementation, the central node sends the training parameters.

Optionally, the training parameter is included in broadcast information, the broadcast information includes a training parameter corresponding to each of the M distributed nodes, and the central node sends the broadcast information to the M distributed nodes.

Optionally, the training parameter is included in unicast information, the unicast message includes a training parameter of one distributed node, and the central node sends corresponding unicast information to each of the M distributed nodes.

Optionally, the central node sends the training parameter to each distributed node. For example, the central node sends, to the first distributed node, a training parameter corresponding to the first distributed node, and sends, to the second distributed node, a training parameter corresponding to the second distributed node.

Optionally, the central node sends the training parameter to a part of the M distributed nodes. For example, the central node sends, to the first distributed node, the training parameter corresponding to the first distributed node and the training parameter corresponding to the second distributed node.

In this way, in this embodiment of this application, based on a communication network topology (which may be understood as communication links, that is, communication links form a communication network topology), different neural network topologies may be determined by considering communication capabilities and computing capabilities of different nodes for different service types, so that different types of service requirements can be flexibly adapted to.

It should be noted that in this embodiment of this application, an example in which the central node participates in AI model training is used for description. However, it is not limited that the central node participates in AI model training. The central node may be configured to perform tasks such as determining a network parameter based on an indication parameter reported by the distributed node, and sending the network parameter, and a process of AI model training is completed by the distributed node. The central node may be any node in the communication network. Unified described is made herein, and details are not described below again.

FIG. 5 is an interaction diagram of a communication method according to an embodiment of this application. The communication method shown in FIG. 5 may be applied to the communication system shown in FIG. 1a. The method includes the following steps.

S510: A terminal device sends, to a network device, an indication parameter corresponding to the terminal device.

Correspondingly, the network device receives the indication parameter from the terminal device. One terminal device corresponds to one indication parameter.

For details, refer to the foregoing description of S410. Details are not described herein again.

In a possible implementation, the terminal device transmits the indication parameter in terminal device capability information (UE capability information). The network device may determine a communication capability and a computing capability of the terminal device based on the terminal device capability information sent by the terminal device.

Indication parameters reported by different terminal devices may be the same or may be different, which specifically depends on a hardware condition of each terminal device.

S520: The network device determines M network parameters based on N indication parameters, where the M network parameters are in a one-to-one correspondence with M terminal devices in N terminal devices.

For details, refer to the foregoing description of S420. Details are not described herein again.

In a possible implementation, a first communication network parameter in a first network parameter includes a first scheduling parameter $\beta$. For example, N=M=3. In FIG. 1a, the first scheduling parameter $\beta$ indicates a first scheduling policy. The network device comprehensively processes indication parameters of the three terminal devices to determine a scheduling policy $\beta_1$ corresponding to the terminal device #1, determine a scheduling policy $\beta_2$ corresponding to the terminal device #2, and determine a scheduling policy $\beta_3$ corresponding to the terminal device #3.

For example, when time division multiplexing is used, $\beta_1$, $\beta_2$, and $\beta_3$ may be used to respectively represent a proportion of time in which the network device serves each terminal device. When frequency division multiplexing is used, $\beta_1$, $\beta_2$, and $\beta_3$ may be used to represent a proportion of occupying entire spectrum resources by each terminal device.

In FIG. 1a, a computing resource of a terminal device may not completely match a communication resource. For example, limited computing resources of the terminal device cause a high computing latency of the terminal device. Computing resources of the network device are abundant, but a communication transmission latency between the network device and the terminal device is high. The network device needs to comprehensively process the indication parameters of the three terminal devices to determine a network parameter corresponding to each terminal device.

For example, for a node $v$, a quantity of layers of a neural network architecture the node $v$ can process is J, and it is assumed that a set of operations included at a $j^{th}$ layer is $\left\{ o_{vj}^{i} \right\}$ , and a probability that each operation in the set of operations is selected is $p_{vj}^{1}, p_{vj}^{2}, \ldots, p_{vj}^{I}$ . A value range of $i$ is related to a specific service type, values for different services are different, $i$ is a positive integer, $j$ is a positive integer, and is related to a computing capability of a node.

An average computing latency of processing the $j^{th}$ layer by the node $v$ may be expressed as:

$$\mathbb{E}[\tau_{vj}] = \sum_{i \in I, j \in J} p_{vj}^{i} \times F(o_{vj}^{i}) = p_{vj}^{1} \times F(o_{vj}^{1}) + p_{vj}^{2} \times F(o_{vj}^{2}) + \cdots + p_{vj}^{I} \times F(o_{vj}^{I})$$

(3)

A total average computing latency of processing the J layers by the node $v$ may be expressed as:

$$\mathbb{E}\left[\text{latency}_{v}^{comp.}\right] = \sum_{j \in J} \mathbb{E}[\tau_{vj}] \tag{4}$$

A quantity of layers of a neural network architecture a node can process and a specific operation at each layer may be different from those of another node, which depends on a neural network parameter corresponding to the node.

A total average computing latency of processing an AI model by a communication network may be expressed as follows:

$$\mathbb{E}\left[\text{latency}_{N+1}^{comp.}\right] = \sum_{1, v \in [1, N+1]}^{N+1} \beta_{v} \ \mathbb{E}\left[\text{latency}_{v}^{comp.}\right] \tag{5}$$

$\beta_{v}$ indicates a probability that the node $v$ is scheduled. It is assumed that there are total n links between nodes, and communication transmission latencies are respectively $\varphi_{1}, \varphi_{2} \ldots \varphi_{n}$. A total average communication transmission latency of processing the AI model by the communication network may be expressed as:

$$\mathbb{E}[\varepsilon] = \boldsymbol{\beta}_{1} \times \varphi_{1} + \boldsymbol{\beta}_{2} \times \varphi_{2} + \boldsymbol{\beta}_{3} \times \varphi_{3} + \ldots + \boldsymbol{\beta}_{n} \times \varphi_{n} \tag{6}$$

A total latency of processing the AI model by the communication network may be expressed as:

$$D(\boldsymbol{p}, \boldsymbol{\beta}) = \mathbb{E}\left[\text{latency}_{N+1}^{comp.}\right] + \ \mathbb{E}[\varepsilon] \tag{7}$$

It can be learned from Formula (7) that the total latency of processing the AI model by the communication network is associated with the communication network parameter and the neural network parameter.

When constructing an objective function L, the network device may consider the communication network parameter $\beta$ in the objective function $L$. The objective function $L$ may be expressed as:

$$L = \sum_{k=1}^{K} l\left(\boldsymbol{p}, \boldsymbol{\beta}, \boldsymbol{\theta}; (x_{k}, y_{k})\right) + \lambda_{1} \|\boldsymbol{\theta}\|_{2}^{2} + \lambda_{2} (D(\boldsymbol{p}, \boldsymbol{\beta}) - D_{Max})^{2} \tag{8}$$

The objective function L is related to parameters such as $\theta$, $l(\boldsymbol{p}, \beta, \theta; (x_{k}, y_{k}))$, $D(\boldsymbol{p}, \beta)$, $D_{Max}$, $\lambda_{1}$, and $\lambda_{2}$. $\boldsymbol{p}$ is used to represent a specific operation at each layer, $\beta$ is used to represent a communication network parameter (which may be understood as a scheduling parameter herein), $\theta$ is used to represent a weight of a neural network, $l(\boldsymbol{p}, \beta, \theta, (x_{k}, y_{k}))$ is used to represent a loss function that considers the communication network parameter $\beta$ on a conventional neural network, $x_{k}$ and $y_{k}$ are a feature and a label of a $k^{th}$ sample respectively, and the loss function is associated with accuracy of a model. For example, for a classification task, the loss function may be a cross-entropy loss function, and for a regression task, the loss function may be a square error. In this embodiment of this application, the loss function is not limited to the two types, and may be user-defined. $D(\boldsymbol{p}, \beta)$ is used to represent the total latency of processing the AI model by the communication network, $D_{Max}$ indicates a maximum latency the AI model can tolerate. $\lambda_{1}$ is used to represent a weight factor for adjusting $\theta$, and $\lambda_{2}$ is used to represent a weight factor for adjusting $(D(\boldsymbol{p}, \beta) - D_{Max})^{2}$.

It should be understood that the communication capability (for example, an SNR) and the computing capability of the distributed node that are included in the indication parameter jointly determine $\boldsymbol{p}$, $\beta$, and $\theta$, affecting an objective

function value that is of the objective function *L* and that is determined by the network device based on the N indication parameters. The network device performs update and iteration based on the objective function *L* to determine a network parameter, until the network parameter corresponding to the terminal device is determined through convergence.

The network device may perform update and iteration to determine the network parameter by using a conventional gradient iteration and cyclic coordinate method. Specific steps are as follows:

a) initialize the neural network parameters $p$ and $\theta$, and the communication network parameter $\beta$;

b) fix $p$ and $\beta$, calculate a gradient $\dfrac{\partial L}{\partial \theta}$, update and iterate $\theta$;

c) fix $p$ and $\theta$, calculate a gradient $\dfrac{\partial L}{\partial \beta}$, update and iterate $\beta$;

d) fix $\theta$ and $\beta$, calculate a gradient $\dfrac{\partial L}{\partial p}$, update and iterate $p$; and

e) repeat steps b to d until convergence occurs.

The network device performs update and iteration based on the foregoing steps a to e, and determines a network parameter corresponding to each terminal device. For example, a network parameter #1 corresponding to the terminal device #1 is $\{\boldsymbol{\beta_1}, J=3, \boldsymbol{p}^i_{11}, \boldsymbol{p}^i_{12}, \boldsymbol{p}^i_{13}\}$, and $\beta_1$ indicates a communication network parameter of the terminal device #1. For example, $\beta_1$ indicates that a proportion of occupying entire spectrum resources by the terminal device #1 is #1, $J=3$ indicates that a quantity of layers of a neural network architecture processed by the terminal device #1 is 3, and $\boldsymbol{p}^i_{11}, \boldsymbol{p}^i_{12}, \boldsymbol{p}^i_{13}$ indicates a specific operation type of each of the three layers processed by the terminal device #1. A specific operation at a layer 1 corresponds to $\boldsymbol{p}^i_{11}$, a specific a specific operation at a layer 2 corresponds to $\boldsymbol{p}^i_{12}$, and a specific operation at a layer 3 corresponds to $\boldsymbol{p}^i_{13}$. A network parameter #2 corresponding to the terminal device #2 is $\{\beta_2, J=5, \boldsymbol{p}^i_{21}, \boldsymbol{p}^i_{22}, \boldsymbol{p}^i_{23}, \boldsymbol{p}^i_{24}, \boldsymbol{p}^i_{25}\}$, and $\beta_2$ indicates a communication network parameter of the terminal device #2. For example, $\beta_2$ indicates that a proportion of occupying entire spectrum resources by the terminal device #2 is #2, $J=5$ indicates that a quantity of layers of a neural network architecture processed by the terminal device #2 is 5, and $\boldsymbol{p}^i_{21}, \boldsymbol{p}^i_{22}, \boldsymbol{p}^i_{23}, \boldsymbol{p}^i_{24}, \boldsymbol{p}^i_{25}$ indicates a specific operation type of each of the five layers processed by the terminal device #2. A specific operation at a layer 1 corresponds to $\boldsymbol{p}^i_{21}$, a specific operation at a layer 2 corresponds to $\boldsymbol{p}^i_{22}$, a specific operation at a layer 3 corresponds to $\boldsymbol{p}^i_{23}$, a specific operation at a layer 4 corresponds to $\boldsymbol{p}^i_{24}$, and a specific operation at a layer 5 corresponds to $\boldsymbol{p}^i_{25}$. A network parameter #3 corresponding to the terminal device #3 is $\{\boldsymbol{\beta_3}, J=4, \boldsymbol{p}^i_{31}, \boldsymbol{p}^i_{32}, \boldsymbol{p}^i_{33}, \boldsymbol{p}^i_{34}\}$, and $\beta_3$ indicates a communication network parameter of the terminal device #3. For example, $\beta_3$ indicates that a proportion of occupying entire spectrum resources by the terminal device #3 is #3, $J=4$ indicates that a quantity of layers of a neural network architecture processed by the terminal device #3 is 4, and $\boldsymbol{p}^i_{31}, \boldsymbol{p}^i_{32}, \boldsymbol{p}^i_{33}, \boldsymbol{p}^i_{34}$ indicates a specific operation type of each of the four layers processed by the terminal device #2. A specific operation at a layer 1 corresponds to $\boldsymbol{p}^i_{41}$, a specific operation at a layer 2 corresponds to $\boldsymbol{p}^i_{42}$, a specific operation at a layer 3 corresponds to $\boldsymbol{p}^i_{43}$, and a specific operation at a layer 4 corresponds to $\boldsymbol{p}^i_{44}$.

A specific value of the network parameter corresponding to each terminal device is determined by the network device based on the N indication parameters with reference to the objective function **L**.

In a possible implementation, a specific operation at each layer in the first network parameter may be associated with one probability value, or may be associated with a plurality of probability values. For example, the network device may specifically indicate, in the neural network parameter, a specific operation at a layer, that is, $o^i_{vj}$. In addition, the

specific operation is associated with $p_{vj}^i$, because the specific operation corresponds to one probability value. Therefore, the network device may indicate only one probability value, and the terminal device may determine an associated specific operation based on the probability value. Alternatively, the network device may indicate a plurality of probability values in the neural network parameter, that is, no specific operation is specified. For example, the neural network parameter includes $p_{vj}^1, p_{vj}^2 \dots p_{vj}^i$.

For example, for the terminal device #1, a specific operation at each layer is associated with a probability value, that is, $p_{11}^i$ is associated with an operation at the first layer, $p_{12}^i$ is associated with an operation at the second layer, and $p_{13}^i$ is associated with an operation at the third layer. In this way, the terminal device determines a corresponding operation based on the probability value.

In a possible implementation, the scheduling parameter in step S520 may further include but is not limited to a spectrum, power allocation, MCS selection, and the like.

Specifically, $\beta$ is a scheduling parameter of a communication resource, and has different physical meanings in different cases. When time division multiplexing is considered, $\beta$ is a proportion of time in which different terminal devices are served. When frequency division multiplexing is considered, $\beta$ is a spectrum resource occupied by different terminal devices. When power allocation is considered, $\beta$ is a proportion of transmit power allocated to each terminal device. When MCS selection is considered, $\beta$ is an MCS selection manner of each terminal device.

In a possible implementation, the first scheduling parameter $\beta_1$ includes $\beta_{11}$, $\beta_{12}$, ... , $\beta_{1i}$, where $\beta_{11}$ indicates that a proportion of occupying entire spectrum resources by the terminal device #1 is #1, $\beta_{12}$ indicates transmit power allocation of the terminal device #1, $\beta_{1i}$ indicates an MCS selection manner of the terminal device #1, and the like.

The foregoing specific examples of the plurality of scheduling parameters may be combined with each other. This is merely a general description herein. Another combination manner is not limited in this embodiment of this application.

It should be understood that different communication environments correspond to different scheduling parameters, different scheduling parameters correspond to different network parameters, and different network parameters may correspond to different neural network architectures.

Impact of communication resource scheduling (scheduling parameter) on a search policy of neural network architecture search is considered, and the communication resource scheduling is embedded into the neural network architecture search. In this embodiment of this application, a neural network architecture and communication resource scheduling can affect each other, and a communication resource scheduling policy applicable to a neural network is determined by training the neural network (training the neural network may refer to calculating a gradient by using an objective function, and reversely updating a weight and the objective function), implementing bidirectional efficient matching between a communication resource and a neural network architecture. In this way, neural network architecture search in a communication network can be applicable to a variable communication environment, and a neural network architecture determined through the neural network architecture search in the variable communication environment can meet requirements of a node for a low latency and high model accuracy of an AI model.

S530: The network device sends the M network parameters.

For details, refer to step S430. Details are not described herein again.

When the scheduling parameter in the communication network parameter is a scheduling policy, the scheduling policy may indicate a manner of scheduling a communication resource by the terminal device, and the neural network parameter may indicate a neural network architecture configuration of the terminal device.

S540: The network device performs AI model training and inference with the M terminal devices.

AI model training may be classified into centralized training (training is completed at the central node) and distributed training (training is completed at the M nodes). AI model inference can be classified into centralized inference (inference is completed at the central node) and distributed inference (inference is completed at the M distributed nodes).

Specifically, when centralized training is selected, the distributed nodes report the N indication parameters. The central node determines a communication topology and calculates an objective function value based on the N indication parameters, then obtains a neural network model through reverse iteration of the gradient, and finally delivers the communication network parameter and the neural network parameter to the distributed node. Optionally, in centralized training, the distributed node may send training data to the central node, and the central node completes AI model training. When distributed training is selected, information exchange needs to be performed between nodes for calculation of the objective function value and reverse iteration of the gradient. After the neural network training is completed, inference may be performed based on the trained neural network. When centralized inference is selected, the first distributed node may send inference data to the central node, and the central node completes inference on the inference data based on a trained neural network, and sends an inference result to the first distributed node. When distributed inference is selected, the first distributed node may send inference data to the central node, the central node sends corresponding inference data to the M distributed nodes, the M distributed nodes and the central node jointly complete inference on the inference data based on neural networks that are respectively trained by the M distributed nodes and the central node, and the central node feeds back an inference result to the first distributed node.

For example, when the first distributed node needs to perform image recognition, the first distributed node uploads a picture to the central node as an input of a neural network, and a recognition result is obtained at the first distributed node (that is, an output of the neural network) through the neural network between the central node and the first distributed node, that is, inference on the picture is completed.

It should be understood that distributed training of the AI model corresponds to distributed inference of the AI model. Centralized training of the AI model corresponds to centralized inference of the AI model, or may correspond to distributed inference of the AI model.

In centralized training, in FIG. 1a, the terminal device may send training data to the network device, and the network device completes AI model training and inference. In distributed training, the network device sends training data to the M terminal devices. That the network device sends training data to the M terminal devices may be understood as: The network device sends the training data to each terminal device; or may be understood as: The network device sends the training data to a first terminal device in the M terminal devices, and the first terminal device sends data obtained through training to a terminal device of a next node for processing.

In distributed training, the network device sends training data to the M terminal devices. That the network device sends training data to the M terminal devices may be understood as: The network device sends the training data to each terminal device; or may be understood as: The network device sends the training data to a first terminal device in the M terminal devices, and the first terminal device sends data obtained through training to a terminal device of a next node for processing.

In a possible implementation, the network device may determine a service characteristic of each terminal device based on service characteristic information reported by the N terminal devices, divide, based on the service characteristic, input data (to-be-processed data) corresponding to the AI model into a plurality of parts, and send the plurality of parts to corresponding terminal devices.

Optionally, the network device may send same data to different terminal devices.

In a possible implementation, in distributed training, in FIG. 1a, the network device first sends training data #1 to the terminal device #1 (a training order of the terminal device #1 is the first), the terminal device #1 trains the training data #1 based on a network parameter #1, and sends a training result of the training data #1 to the network device. The network device sends the training result of the training data #1 to the terminal device #2 (a training order of the terminal device #2 is the second) as training data #2 of the terminal device #2. The terminal device #2 trains the training data #2 based on a network parameter #2, and sends a training result of the training data #2 to the network device. The network device sends the training result of the training data #2 to the terminal device #3 (a training order of the terminal device #3 is the third) as training data #3 of the terminal device #3. The terminal device #3 trains the training data #3 based on a network parameter #3, and sends a training result of the training data #3 to the network device, until a trained neural network is obtained. The network device and the M terminal devices perform inference based on the trained neural network.

In still another possible implementation, in distributed training, in FIG. 1a, the network device divides input data into three parts, and separately sends the three parts to the terminal device #1, the terminal device #2, and the terminal device #3. The terminal device #1, the terminal device #2, and the terminal device #3 (training orders of the terminal device #1, the terminal device #2, and the terminal device #3 are the same) train respective training data based on a network parameter #1, a network parameter #2, and a network parameter #3 that respectively correspond to the terminal device #1, the terminal device #2, and the terminal device #3, until a trained neural network is obtained. The network device and the M terminal devices perform inference based on the trained neural network.

The training data sent by the network device to the M terminal devices may be initial input data (the network device does not participate in initial processing of the data, but may participate in a process of subsequent processing of the data), or may be output data obtained after the network device processes initial input data.

In the foregoing manner, the communication network including the N terminal devices and the network device completes, in a manner of high model accuracy and low latency, AI model (which may also be understood as a neural network, where the AI model and the neural network have a same meaning and are used interchangeably in embodiments of this application) training and inference in the neural network architecture indicated by the M network parameters.

It should be noted that the description of AI model training and inference in step S540 is also applicable to the following. Therefore, a process of AI model training and inference is not described in detail in the following. For specific content, refer to step S540.

In this embodiment of this application, step S530 may be performed before step S540, or step S530 and step S540 may be performed synchronously.

In addition, determining the network parameter by the central node and performing AI model training and inference are not subject to a specific sequence in this embodiment of this application. The two may be performed synchronously or in sequence. Unified described is made herein, and details are not described below again.

Impact of communication resource scheduling on a search policy of neural network architecture search is considered, and the communication resource scheduling is embedded into the neural network architecture search. In this embodiment of this application, a neural network architecture and communication resource scheduling can affect each other, and a communication resource scheduling policy applicable to a neural network is determined by training the neural network, implementing bidirectional efficient matching between a communication resource and a neural network architecture. In this way, neural network architecture search in a communication network can be applicable to a variable communication environment, and training of a neural network may be completed in a manner of high model accuracy and low latency based on the determined neural network architecture.

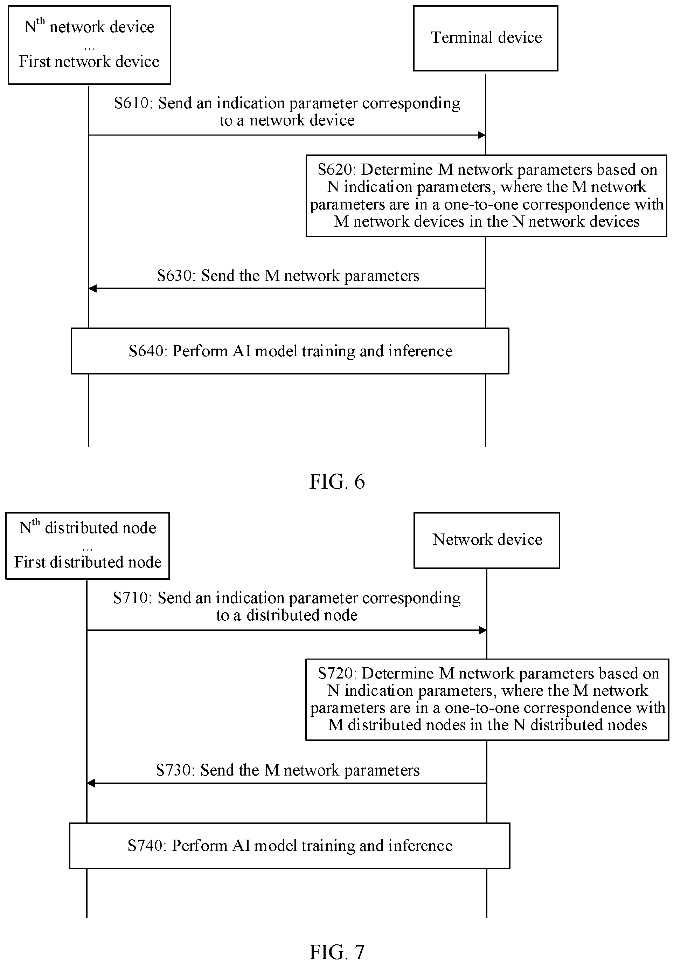

FIG. 6 is an interaction diagram of another communication method according to an embodiment of this application. The communication method shown in FIG. 6 may be applied to the communication system shown in FIG. 1b. The method includes the following steps.

S610: A network device sends, to a terminal device, an indication parameter corresponding to the network device.

Correspondingly, the terminal device receives the indication parameter from the network device. One network device corresponds to one indication parameter.

For specific content, refer to the description of step S410. Details are not described herein again.

S620: The terminal device determines M network parameters based on N indication parameters, where the M network parameters are in a one-to-one correspondence with M network devices in N network devices.

For specific content, refer to the description of step S420. Details are not described herein again.

The M network parameters include a first network parameter, and the first network parameter corresponds to a first network device. The first network parameter includes a first communication network parameter and a first neural network parameter.

In a possible implementation, the first communication network parameter includes a CoMP mode, and the CoMP mode may include a JP-CoMP mode and a CB-CoMP mode.

Specifically, the terminal device determines a channel condition between the terminal device and the network device based on a communication capability reported by the network device, and determines a specific type of the CoMP mode based on the channel condition. For example, when the channel condition is poor (for example, an SNR being lower than a threshold indicates that the channel condition is poor), to ensure communication transmission quality, the plurality of network devices need to transmit same data to the terminal device, to ensure communication transmission quality. When the channel condition is good (for example, the SNR being higher than or equal to a threshold indicates that the channel condition is good), the plurality of network devices may separately transmit different data to the terminal device.

The foregoing two cases may be classified as different communication modes. The communication mode includes the JP-CoMP mode and the CB-CoMP mode. When the communication system is in the CB-CoMP mode, different network devices may transmit different data to the terminal device, and when the communication system is in the JP-CoMP mode, different network devices need to transmit same data to the terminal device, to ensure reliability of data transmission, that is, the terminal device receives correct data. Consequently, neural network parameters sent by a central node (the terminal device) to distributed nodes (the network devices) are the same, that is, a plurality of distributed nodes share one neural network parameter. For each distributed node, a quantity of layers of a processed neural network architecture is the same (each specific layer is the same), operations at each layer are also the same, and processed data is also the same. This improves reliability of an AI model parameter and data transmission, ensuring quality of current search space.

Specifically, when the terminal device determines that channel conditions between the terminal device and the plurality of network devices are good, the terminal device determines that the communication parameter includes the CB-CoMP mode, and the terminal device may configure different neural network parameters for each of the plurality of network devices in the CB-CoMP mode, so that more feasible space can be explored, to improve accuracy of the AI model. When the terminal device determines that channel conditions between the terminal device and the plurality of network devices are poor, the terminal device determines that the communication parameter includes the JP-CoMP communication mode, and the terminal device may configure a same neural network parameter for the plurality of network devices in the JP-CoMP communication mode, so that the plurality of network devices select a same neural network architecture configuration, to improve reliability of an AI model parameter and data transmission, ensuring quality of current search space.

S630: The terminal device sends the M network parameters.

For details, refer to step S430. Details are not described herein again.

When the terminal device determines that the communication network parameter is the CB-CoMP mode, the terminal device can provide more neural network parameter options for each of the M network devices. In this way, the network device can fully explore possible search space, to improve AI model training accuracy. When the terminal device determines that the communication network parameter is in the JP-CoMP mode, the terminal device provides a same neural network parameter for all of the M network devices. In this way, reliability of an AI model parameter and data can be improved.

For example, in the CB-CoMP mode, a network parameter #1 corresponding to the network device #1 is $\{J=3, \; p_{11}^i, p_{12}^i, p_{13}^i$ , a network parameter #2 corresponding to the network device #2 is $\{J=5, \; p_{21}^i, p_{22}^i, p_{23}^i, p_{24}^i, p_{25}^i\}$ , and a network parameter #3 corresponding to the network device #3 is $\{ \; J=4, \; p_{31}^i, p_{32}^i, p_{33}^i, p_{34}^i\}$ . In the JP-CoMP mode, a network parameter #1 corresponding to the network device #1 is $\{J=3, \; p_{11}^i, p_{12}^i, p_{13}^i \}$ , a network parameter #2 corresponding to the network device #2 is $\{J=3, \; p_{11}^i, p_{12}^i, p_{13}^i \}$ , and a network parameter #3 corresponding to the network device #3 is $\{ \; J=3, \; p_{11}^i, p_{12}^i, p_{13}^i \}$ . The network parameter #1, the network parameter #2, and the network parameter #3 are the same, and each specific layer is the same. That is, the network device #1, the network device #2, and the network device #3 may be considered as one network device.

In a possible implementation, the network parameter sent by the terminal device to the network device includes only the neural network parameter. This can reduce signaling overheads.

S640: The terminal device performs AI model training and inference with the M network devices.

For details, refer to the description of step S540, and details are not described herein again.

In the JP-CoMP mode, the terminal device sends same data to the M network devices, and the neural network parameters are also the same. In other words, the M network devices may be considered as one network device. In the CB-CoMP mode, the terminal device may send different data to the M network devices, and the neural network parameters may also be different.

In a possible implementation, in the CB-CoMP mode, the terminal device may first send training data #1 to the network device #1 (a training order of the network device #1 is the first), the network device #1 trains the training data #1 based on a network parameter #1, and sends a training result of the training data #1 to the terminal device. The terminal device sends training data #2 to the network device #2 (a training order of the network device #2 is the second), the network device #2 trains the training data #2 based on a network parameter #2, and the terminal device sends a training result of the training data #2 to the terminal device. The terminal device sends training data #3 to the network device #3 (a training order of the network device #3 is the third), the network device #3 trains the training data #3 based on a network parameter #3, and sends a training result of the training data #3 to the terminal device, to finally obtain a trained neural network.

Optionally, the training result of the training data #1 may be the training data #2, and the training result of the training data #2 may be the training data #3. In other words, training data sent by the terminal device to the network device may be output data obtained through training.

In a possible implementation, in the JP-CoMP mode, the terminal device may send training data #1 to the network device #1, the network device #2, and the network device #3 simultaneously or in sequence. The network device #1, the network device #2, and the network device #3 train the training data #1 based on a same network parameter #1, and send a training result of the training data #1 to the terminal device, to finally obtain a trained neural network.

In a possible implementation, the training data sent by the terminal device to the network device may be initial input data (the terminal device does not participate in initial processing of the data, but may participate in a process of subsequent processing of the data), or may be output data obtained after the terminal device processes initial input data. A specific data sending manner and a type of data sent by the terminal device to the network device are not limited in this embodiment of this application.

In this embodiment of this application, step S630 may be performed before step S640, or step S630 and step S640 may be performed synchronously.

The central node determines the communication mode based on the channel condition. When determining that the channel condition is good, the central node can provide more neural network parameter options for each distributed node, which can improve training accuracy of the AI model. When determining that the channel condition is poor, the central node provides a same neural network parameter for each distributed node, which can ensure quality of current search space and improve reliability of an AI model parameter and data. In this way, in this embodiment of this application, neural network architecture search in a communication network can adapt to a variable communication environment, and training and processing of an AI model can be completed based on the determined neural network architecture in a manner of high model accuracy and low latency.

Specifically, in this embodiment of this application, a proper communication mode is determined based on a channel condition, to determine effective search space for neural network architecture search, and avoid an invalid neural network architecture search operation.

FIG. 7 is an interaction diagram of still another communication method according to an embodiment of this application. The communication method shown in FIG. 7 may be applied to the communication system shown in FIG. 1c. The method includes the following steps.

S710: A distributed node sends, to a network device, an indication parameter corresponding to the distributed node.

Correspondingly, the network device receives the indication parameter from the distributed node. One distributed node corresponds to one indication parameter.

For details, refer to the foregoing description of S410. Details are not described herein again.

In FIG. 1c, N distributed nodes include both a network device and a terminal device. This embodiment of this application is described by using an example in which the network device #1 is a central node and other devices are distributed nodes.

In a possible implementation, the network device #2 sends an indication parameter of the network device #5 to the network device #1; or the network device #3 sends an indication parameter of the network device #5 to the network device #1; or the network device #4 sends an indication parameter of the network device #5 to the network device #1.

S720: The network device determines M network parameters based on N indication parameters, where the M network parameters are in a one-to-one correspondence with M distributed nodes in the N distributed nodes.

For details, refer to the foregoing description of S420. Details are not described herein again.

The M network parameters include a first network parameter, and the first network parameter corresponds to a first distributed node. The first network parameter includes a first communication network parameter and a first neural network parameter.

In a possible implementation, the first communication network parameter includes a CoMP mode and a scheduling parameter. For descriptions of the scheduling parameter and the CoMP mode, reference may be made to the foregoing descriptions, and details are not described herein again.

For ease of description, in this embodiment of this application, it is specified that the network device #1 is a node #1, the network device #2 is a node #2, the network device #3 is a node #3, the network device #4 is a node #4, the network device #5 is a node #5, and the terminal device is a node #6. In this embodiment of this application, sets $\mathcal{C}$ = {5, 6} and $\mathcal{T}$ = {1,2,3,4} are further defined. The node #1 is a root node {r}, and an output of the node #1 passes through the nodes #2, #3, and #4.

A total average latency of processing an AI model by a communication network may be expressed as:

$$\mathrm{D}(\boldsymbol{p}, \boldsymbol{\beta}) = \sum_{m \in \mathcal{C}} (\sum_{l \in \mathcal{L}^m} \tau_l^m + \varepsilon^m) + \sum_{l \in \mathcal{L}^r} \tau_l^r + \sum_{m \in \mathcal{T} \setminus \{r\}} \beta_{r,m} (\varepsilon^{r,m} + \sum_{l \in \mathcal{L}^m} \tau_l^m + \varepsilon^m) \ (9)$$

$\tau_l^m$ is a computing latency of an $l$th layer in a node #m, $\mathcal{L}^m$ is a quantity of layers of the node #m, $\varepsilon^m$ is a communication latency from the node #m to a next node, $\varepsilon^{r,m}$ is a communication latency from a node #r to the node #m, $\beta_{r,m}$ is a scheduling parameter from the node #r to the node #m, and $\beta = \{\beta_{r,m}, m \in \mathcal{T}\}$.

Specifically, both a communication transmission latency and a computing latency of each node included in the communication network are calculated in Formula (9), and the total average latency of processing the AI model by the communication network is obtained.

The central node updates and iterates a network parameter based on an objective function L shown in Formula (9) until convergence, and determines a network parameter corresponding to a distributed node.

Specifically, when the central node determines that the communication network is in a JP-CoMP mode, the central node allocates a same neural network parameter to nodes from the node #2 to the node #4, and considers impact of scheduling parameters between the node #1 and the nodes from the node #2 to the node #4, and the node #2 to the node #5 are in the JP-CoMP communication mode. When the central node determines that the entire communication network is in a CB-CoMP mode, the central node allocates different neural network parameters to the nodes from the node #2 to the node #4, and considers impact of scheduling parameters between the node #1 and the nodes from the node #2 to the node #4, and the node #2 to the node #5 are in the CB-CoMP communication mode. The total latency of processing the AI model by the communication network is a result obtained based on Formula (9). The central node determines, based on Formula (9) and the objective function L, the network parameter corresponding to the distributed node.

In a possible implementation, when the communication network parameter includes the CB-CoMP mode, in this embodiment of this application, neural network architecture search may be performed based on a given neural network architecture search policy, to obtain an optimized scheduling parameter and neural network parameter. If a scheduling probability of a link differs from a scheduling probability of another link by one threshold, where the threshold may be 10 times, for example, a probability that a first link is scheduled is 0.8, and a probability that a second link is scheduled is 0.08, the two scheduling probabilities differ from each other by 10 times, in this embodiment of this application, to slightly reduce model accuracy, the link (for example, the second link) may be not scheduled to reduce communication overheads; or the link (for example, the second link) and another link may form the JP-CoMP mode to enhance a signal over another link. In this way, post-pruning may be performed on a generated neural network architecture, to effectively avoid obtaining trace of model accuracy at the cost of a large amount of communication network resources, that is, a marginal benefit is reduced.

S730: The network device sends the M network parameters.

For details, refer to step S430. Details are not described herein again.

S740: The network device performs AI model training and inference with the M distributed nodes.

For details, refer to the description of step S540, and details are not described herein again.

Specifically, in the JP-CoMP mode, data sent by the network device #1 to the network device #2, the network device #3, and the network device #4 is the same, and neural network parameters are also the same. In the CB-CoMP mode, data sent by the network device #1 to the network device #2, the network device #3, and the network device #4 may be different, and neural network parameters may be different.

In a possible implementation, in the CB-CoMP mode, the network device #1 first sends training data #1 to the network device #2 (a training order of the network device #2 is the first), the network device #2 trains the training data #1 based on a network parameter #1, and sends a training result of the training data #1 to the network device #5. Then the network device #1 sends training data #2 to the network device #3 (a training order of the network device #3 is the second), the network device #3 trains the training data #2 based on a network parameter #2, and sends a training result of the training data #2 to the network device #5. Finally, the network device #1 sends training data #3 to the network device #4 (a training order of the network device #4 is the third), the network device #4 trains the training data #3 based on a network parameter #3, and sends a training result of the training data #3 to the network device #5 (a training order of the network device #5 is the fourth). The network device #5 trains received training data based on a network parameter #4, and sends a training result to the terminal device #1. The terminal device #1 trains received training data based on a network parameter #5 (a training order of the terminal device #1 is the fifth), to finally obtain a trained neural network.

Optionally, the training result of the training data #1 may be the training data #2, and the training result of the training data #2 may be the training data #3. In other words, training data sent by the network device #1 to the network device #2, the network device #3, and the network device #4 may be output data obtained through training (this relates to a training order).

In a possible implementation, in the JP-CoMP mode, the network device #1 may send training data #1 to the network device #2, the network device #3, and the network device #4 simultaneously or in sequence. The network device #2, the network device #3, and the network device #4 train the training data #1 based on a same network parameter #1, and send a training result of the training data #1 to the network device #5. The network device #5 trains received training data based on a network parameter #2, and sends a training result to the terminal device #1. The terminal device #1 trains received training data based on a network parameter #3, to finally obtain a trained neural network.

In a possible implementation, the training data sent by the network device #1 to the distributed node may be initial input data (the network device #1 does not participate in initial processing of the data, but may participate in a process of subsequent processing of the data), or may be output data obtained after the network device #1 processes initial input data. A specific data sending manner and a type of data sent by the terminal device to the network device are not limited in this embodiment of this application.

In the foregoing manner, the communication network including the foregoing devices completes, in a manner of high model accuracy and low latency, neural network (AI model) training and inference in a neural network architecture indicated by the M network parameters.

In this embodiment of this application, step S730 may be performed before step S740, or step S730 and step S740 may be performed synchronously.

Impact of communication resource scheduling and a communication mode on a search policy of neural network architecture search is considered, and the communication resource scheduling and the communication mode are embedded into the neural network architecture search. In this embodiment of this application, a neural network architecture and communication resource scheduling can affect each other, and search space can be effectively compressed, avoiding a waste of resources caused by invalid search. With the mutual effect between the communication resource scheduling and the communication mode, and deep integration with a neural network, a communication resource scheduling policy applicable to the neural network is determined. In this embodiment of this application, bidirectional efficient matching between a communication resource and a neural network architecture is implemented. In this way, neural network architecture search in a communication network can be applicable to a variable communication environment, and AI model training and inference may be completed in a manner of high model accuracy and low latency based on the determined neural network architecture.

Specifically, compared with a conventional chain network, in this embodiment of this application, link scheduling and a communication mode in a mesh network are associated, so that search space of a neural network architecture can be optimized, and post-pruning is performed on the neural network architecture, efficiently utilizing communication network resources, and implementing bidirectional matching between a communication network and a neural network.

It should be understood that the technical solutions shown in FIG. 5 to FIG. 7 may be considered as support for the technical solution shown in FIG. 4, or may be considered as another expression of the technical solution shown in FIG. 4. This is not limited in embodiments of this application.

It should be further understood that the technical solutions shown in FIG. 5 to FIG. 7 are merely a part but not all of embodiments of this application.

The foregoing describes the method embodiments of this application, and the following describes corresponding apparatus embodiments.

To implement functions in the foregoing methods provided in embodiments of this application, terminals and network devices may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

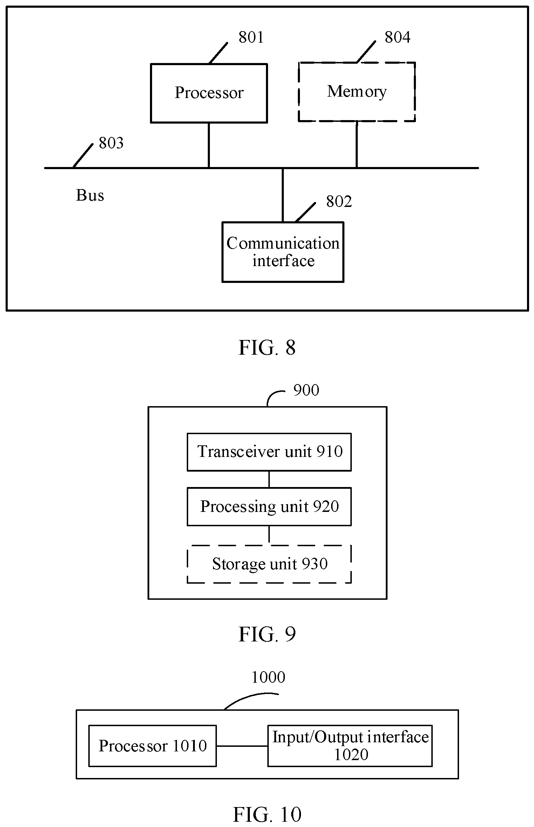

FIG. 8 is a block diagram of a communication apparatus according to an embodiment of this application. The communication apparatus includes a processor 801 and a communication interface 802.

Optionally, the processor 801 and the communication interface 802 may be connected to each other by using a bus 803. The communication apparatus shown in FIG. 8 may be a central node, or may be a distributed node. More specifically, the communication apparatus shown in FIG. 8 may be a network device, or may be a terminal device.

Optionally, the communication apparatus further includes a memory 804.

The memory 804 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 804 is configured to store related instructions and data.

The processor 801 may be one or more central processing units (central processing unit, CPU). When the processor 801 is one CPU, the CPU may be a single-core CPU or a multi-core CPU.

When the communication apparatus is a central node, the processor 801 in the communication apparatus is configured to read a computer program or instructions stored in the memory 802, for example, to perform the following operations: obtaining N indication parameters that are in a one-to-one correspondence with N distributed nodes, where a first indication parameter in the N indication parameters indicates a communication capability and a computing capability of a first distributed node; determining M network parameters based on the N indication parameters; and sending the M network parameters.

It should be understood that the foregoing content is merely used as an example for description. When the communication apparatus is a central node, the communication apparatus is responsible for performing the methods or steps related to the central node in the foregoing method embodiments.

When the communication apparatus is a distributed node, the processor 801 in the communication apparatus is configured to read program code stored in the memory 802, for example, to perform the following operations: sending a first indication parameter; and receiving a first network parameter.

It should be understood that the foregoing content is merely used as an example for description. When the communication apparatus is a distributed node, the communication apparatus is responsible for performing the methods or steps related to the distributed node in the foregoing method embodiments.

It should be understood that the foregoing description is merely an example. For specific content, reference may be made to the content shown in the foregoing method embodiment. In addition, for implementation of each operation in FIG. 8, refer to corresponding descriptions of the method embodiments shown in FIG. 4 to FIG. 7.

FIG. 9 is another block diagram of a communication apparatus 900 according to an embodiment of this application. The communication apparatus 900 may be used in a central node, and may be configured to implement the method in the foregoing embodiments. The communication apparatus 900 includes a transceiver unit 910 and a processing unit 920. The following describes the transceiver unit 910 and the processing unit 920 by using examples.

When the communication apparatus 900 is a central node, the transceiver unit 910 is configured to obtain N indication parameters that are in a one-to-one correspondence with N distributed nodes, where a first indication parameter in the N indication parameters indicates a communication capability and a computing capability of a first distributed node. The processing unit 920 is configured to determine M network parameters based on the N indication parameters. The transceiver unit 910 may be further configured to send the M network parameters.

When the communication apparatus 900 is a distributed node, the transceiver unit 910 is configured to send a first indication parameter, receive a first network parameter, and the like. The processing unit 920 is configured to determine a communication configuration and/or an AI model computing configuration based on the first network parameter.

It should be understood that the foregoing content is merely used as an example for description. When the communication apparatus 900 is a central node, the communication apparatus 900 is responsible for performing the methods or steps related to the central node in the foregoing method embodiments. When the communication apparatus 900 is a distributed node, the communication apparatus is responsible for performing the methods or steps related to the distributed node in the foregoing method embodiments.

In a possible implementation, the communication apparatus further includes a storage unit 930, and the storage unit 930 is configured to store a program or code used to perform the foregoing method.

In addition, for implementation of each operation in FIG. 9, refer to corresponding descriptions of the method shown in the foregoing embodiments. Details are not described herein again.

It should be understood that the apparatus embodiments shown in FIG. 8 and FIG. 9 are used to implement the content described in FIG. 4 to FIG. 7 in the foregoing method embodiments. Therefore, for specific execution steps and methods of the apparatuses shown in FIG. 8 and FIG. 9, refer to the content described in the foregoing method embodiments.

FIG. 10 is still another block diagram of a communication apparatus 1000 according to an embodiment of this application. The communication apparatus 1000 may be configured to implement functions of the central node and the distributed node in the foregoing method. The apparatus may be a communication apparatus or a chip in a communication apparatus.

The communication apparatus 1000 includes an input/output interface 1020 and a processor 1010. The input/output interface 1020 may be an input/output circuit. The processor 1010 may be a signal processor, a chip, or another integrated circuit that can implement the method in this application. The input/output interface 1020 is configured to input or output a signal or data.

For example, when the apparatus 1000 is a central node, the input/output interface 1020 is configured to receive N indication parameters. For example, when the apparatus 1000 is a distributed node, the input/output interface 1020 is configured to send a first indication parameter. The processor 1010 is configured to perform a part or all of the steps of any method provided in embodiments of this application.

For example, when the apparatus 1000 is a central node, the apparatus 1000 is configured to perform the steps performed by the central node in the possible implementations of the foregoing method embodiments. For example, the processor 1010 is configured to determine M network parameters based on the N indication parameters. When the apparatus 1000 is a distributed node, the apparatus 1000 is configured to perform the steps performed by the distributed node in the possible implementations of the foregoing method embodiments. For example, the processor 1010 is configured to determine a communication configuration and/or an AI model computing configuration based on a first network parameter.

In a possible implementation, the processor 1010 executes instructions stored in a memory, to implement a function implemented by the central node or the distributed node.

Optionally, the communication apparatus 1000 further includes a memory.

Optionally, the processor and the memory are integrated together.

Optionally, the memory is outside the communication apparatus 1000.

In a possible implementation, the processor 1010 may be a logic circuit, and the processor 1010 inputs/outputs a message or signaling over the input/output interface 1020. The logic circuit may be a signal processor, a chip, or another integrated circuit that can implement the methods in this application.

It should be understood that the foregoing description of the apparatus in FIG. 10 is merely an example for description. The apparatus may be configured to perform the methods in the foregoing embodiments. For specific content, refer to the descriptions in the foregoing method embodiment. Details are not described herein again.

An embodiment of this application further provides a chip, including a processor, configured to invoke, from a memory, instructions stored in the memory and run the instructions, to cause a communication device on which the chip is installed to perform the methods in the foregoing examples.

An embodiment of this application further provides another chip, including an input interface, an output interface, and a processor. The input interface, the output interface, and the processor are connected by using an internal connection path. The processor is configured to execute code in a memory. When the code is executed, the processor is configured to perform the methods in the foregoing examples. Optionally, the chip further includes a memory, and the memory is configured to store a computer program or code.

An embodiment of this application further provides a processor, configured to be coupled to a memory, and configured to perform the method and the function of the central node or the distributed node in any one of the foregoing embodiments.

In another embodiment of this application, a computer program product including instructions is provided. When the computer program product runs on a computer, the method in the foregoing embodiments is implemented.

An embodiment of this application further provides a computer program. When the computer program is run on a computer, the method in the foregoing embodiment is implemented.

In another embodiment of this application, a computer-readable storage medium is provided. The computer-readable storage medium stores a computer program. When the computer program is executed by a computer, the method in the foregoing embodiments is implemented.

In the descriptions of embodiments of this application, the term "a plurality of" means two or more than two unless otherwise specified. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, in embodiments of this application, words such as "first" and "second" are used to distinguish between same or similar items that have a basically same function and effect. A person skilled in the art may understand that words such as "first" and "second" do not limit a quantity and an execution sequence, and the words such as "first" and "second" do not necessarily indicate a difference. In addition, in embodiments of this application, words such as "example" or "for example" are used to give an example, an illustration, or a description.

Any embodiment or design scheme described by using "example" or "for example" in embodiments of this application should not be explained as being more preferred or having more advantages than another embodiment or design scheme. Exactly, use of the words such as "example" or "for example" are intended to present a related concept in a specific manner for ease of understanding.

In the descriptions of embodiments of this application, unless otherwise specified, "/" represents an "or" relationship between associated objects. For example, A/B may represent A or B. "and/or" in this application describes only an association relationship for describing associated objects and represents that three relationships may exist. For example, A and/or B may represent the following three cases: Only A exists, both A and B exist, and only B exists, where A and B may be singular or plural.

It should be understood that "one embodiment" or "an embodiment" mentioned throughout the specification means that specified features, structures, or characteristics related to the embodiment are included in at least one embodiment of this application.

Therefore, "in one embodiment" or "in an embodiment" appearing throughout the specification does not necessarily refer to a same embodiment. In addition, these particular features, structures, or characteristics may be combined in one or more embodiments in any appropriate manner. Sequence numbers of the foregoing processes do not mean execution sequences in embodiments of this application. The execution sequences of the processes should be determined based on functions and internal logic of the processes, and should not be construed as any limitation on implementation processes of embodiments of this application.

It should be understood that "embodiment" mentioned throughout the specification means that specified features, structures, or characteristics related to the embodiment are included in at least one embodiment of this application.

Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for ease and brevity of description, for specific working processes of the system, apparatus, and unit described above, reference may be made to the corresponding processes in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed.

In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of embodiments of this application, but are not intended to limit the protection scope of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

**Claims**

1. A communication method, comprising:

   obtaining, by a central node, N indication parameters that are in a one-to-one correspondence with N distributed nodes, wherein a first indication parameter in the N indication parameters indicates a communication capability and a computing capability of a first distributed node, and the first distributed node is any distributed node in the N distributed nodes;

   determining, by the central node, M network parameters based on the N indication parameters, wherein the M network parameters are in a one-to-one correspondence with M distributed nodes in the N distributed nodes, and a first network parameter in the M network parameters indicates at least one of a communication configuration or neural network architecture configuration of the first distributed node; and

   sending, by the central node, the M network parameters, wherein N and M are positive integers, and M is less than or equal to N.

2. The method according to claim 1, wherein the N indication parameters are further used to determine training parameters corresponding to the M distributed nodes, the training parameters comprise a first training parameter, and the first training parameter indicates a training order in which the first distributed node trains a neural network.

3. The method according to claim 2, wherein the method further comprises:
   sending, by the central node, the training parameters.

4. A communication method, comprising:

   sending, by a first distributed node, a first indication parameter, wherein the first indication parameter indicates a communication capability and a computing capability of the first distributed node;

   receiving, by the first distributed node, a first network parameter, wherein the first network parameter indicates at least one of a communication configuration or a neural network architecture configuration of the first distributed node; and

   determining, by the first distributed node, at least one of the communication configuration or the neural network architecture configuration based on the first network parameter.

**5.** The method according to claim 4, wherein the method further comprises:
receiving, by the first distributed node, a first training parameter, wherein the first training parameter indicates a training order in which the first distributed node trains a neural network.

**6.** The method according to any one of claims 1 to 5, wherein the first indication parameter further indicates a service characteristic of the first distributed node.

**7.** The method according to any one of claims 1 to 6, wherein the first indication parameter comprises first communication capability information, first computing capability information, and first service characteristic information, wherein

the first communication capability information indicates the communication capability of the first distributed node,
the first computing capability information indicates the computing capability of the first distributed node, and
the first service characteristic information indicates the service characteristic of the first distributed node.

**8.** The method according to claim 7, wherein the first communication capability information comprises at least one of the following:

channel characteristic information or communication resource information of a channel between the first distributed node and the central node; or
channel characteristic information or communication resource information of a channel between the first distributed node and a second distributed node, wherein the second distributed node is a distributed node having a connection relationship with the first distributed node.

**9.** The method according to claim 8, wherein the channel characteristic information comprises at least one of the following:
channel state information, a signal-to-noise ratio, link quality, or a location of the first distributed node.

**10.** The method according to any one of claims 1 to 9, wherein the first network parameter comprises a first communication network parameter and a first neural network parameter,

the first communication network parameter indicates the communication configuration, and
the first neural network parameter indicates the neural network architecture configuration.

**11.** The method according to claim 10, wherein the first communication network parameter comprises at least one of the following:
a scheduling parameter or a communication mode.

**12.** The method according to claim 10 or 11, wherein the first neural network parameter comprises at least one of the following:
a quantity of layers of the neural network architecture, an operation corresponding to each of the layers of the neural network architecture, or a weight value of a neural network corresponding to the neural network architecture.

**13.** A communication apparatus, comprising:

a transceiver unit, configured to obtain N indication parameters that are in a one-to-one correspondence with N distributed nodes, wherein a first indication parameter in the N indication parameters indicates a communication capability and a computing capability of a first distributed node, and the first distributed node is any distributed node in the N distributed nodes; and
a processing unit, configured to determine M network parameters based on the N indication parameters, wherein the M network parameters are in a one-to-one correspondence with M distributed nodes in the N distributed nodes, and a first network parameter in the M network parameters indicates at least one of a communication configuration or a neural network architecture configuration of the first distributed node; and
the transceiver unit is further configured to send the M network parameters, wherein N and M are positive integers, and M is less than or equal to N.

**14.** The apparatus according to claim 13, wherein the N indication parameters are further used to determine training parameters corresponding to the M distributed nodes, the training parameters comprise a first training parameter, and the first training parameter indicates a training order in which the first distributed node trains a neural network.

15. The apparatus according to claim 14, wherein the transceiver unit is further configured to send the training parameters.

16. The apparatus according to any one of claims 13 to 15, wherein the first indication parameter further indicates a service characteristic of the first distributed node.

17. The apparatus according to any one of claims 13 to 16, wherein the first indication parameter comprises first communication capability information, first computing capability information, and first service characteristic information, wherein

the first communication capability information indicates the communication capability of the first distributed node, the first computing capability information indicates the computing capability of the first distributed node, and the first service characteristic information indicates the service characteristic of the first distributed node.

18. The apparatus according to claim 17, wherein the first communication capability information comprises at least one of the following:

channel characteristic information or communication resource information of a channel between the first distributed node and the communication apparatus; or
channel characteristic information or communication resource information of a channel between the first distributed node and a second distributed node, wherein the second distributed node is a distributed node having a connection relationship with the first distributed node.

19. The apparatus according to claim 18, wherein the channel characteristic information comprises at least one of the following:
channel state information, a signal-to-noise ratio, link quality, or a location of the first distributed node.

20. The apparatus according to any one of claims 13 to 19, wherein the first network parameter comprises a first communication network parameter and a first neural network parameter,

the first communication network parameter indicates the communication configuration, and
the first neural network parameter indicates the neural network architecture configuration.

21. The apparatus according to claim 20, wherein the first communication network parameter comprises at least one of the following:
a scheduling parameter or a communication mode.

22. The apparatus according to claim 20 or 21, wherein the first neural network parameter comprises at least one of the following:
a quantity of layers of the neural network architecture, an operation corresponding to each of the layers of the neural network architecture, or a weight value of a neural network corresponding to the neural network architecture.

23. A communication apparatus, comprising:

a transceiver unit, configured to send a first indication parameter, wherein the first indication parameter indicates a communication capability and a computing capability of the communication apparatus, and
the transceiver unit is further configured to receive a first network parameter, wherein the first network parameter indicates at least one of a communication configuration or a neural network architecture configuration of the communication apparatus; and
a processing unit, configured to determine at least one of the communication configuration or the neural network architecture configuration based on the first network parameter.

24. The apparatus according to claim 23, wherein the transceiver unit is further configured to receive a first training parameter, wherein the first training parameter indicates a training order in which the communication apparatus trains a neural network.

25. The apparatus according to claim 23 or 24, wherein the first indication parameter comprises first communication capability information, first computing capability information, and first service characteristic information, wherein

the first communication capability information indicates the communication capability of the communication apparatus,

the first computing capability information indicates the computing capability of the first communication apparatus, and

the first service characteristic information indicates a service characteristic of the first communication apparatus.

26. The apparatus according to claim 25, wherein the first communication capability information comprises at least one of the following:

channel characteristic information or communication resource information of a channel between the communication apparatus and a central node; or
channel characteristic information or communication resource information of a channel between the communication apparatus and a second distributed node, wherein the second distributed node is a distributed node having a connection relationship with the first communication apparatus.

27. The apparatus according to claim 26, wherein the channel characteristic information comprises at least one of the following:
channel state information, a signal-to-noise ratio, link quality, or a location of the first communication apparatus.

28. The apparatus according to any one of claims 23 to 27, wherein the first network parameter comprises a first communication network parameter and a first neural network parameter,

the first communication network parameter indicates the communication configuration, and
the first neural network parameter indicates the neural network architecture configuration.

29. The apparatus according to claim 28, wherein the first communication network parameter comprises at least one of the following:
a scheduling parameter or a communication mode.

30. The apparatus according to claim 28 or 29, wherein the first neural network parameter comprises at least one of the following:
a quantity of layers of the neural network architecture, an operation corresponding to each of the layers of the neural network architecture, or a weight value of a neural network corresponding to the neural network architecture.

31. A communication apparatus, comprising a processor, wherein the processor is coupled to a memory, and the processor is configured to execute a computer program or instructions, causing the communication apparatus to perform the method according to any one of claims 1 to 3 and claims 6 to 12.

32. A communication apparatus, comprising a processor, wherein the processor is coupled to a memory, and the processor is configured to execute a computer program or instructions, causing the communication apparatus to perform the method according to any one of claims 4 to 12.

33. A communication apparatus, comprising a logic circuit and an input/output interface, wherein the input/output interface is configured to obtain N indication parameters that are in a one-to-one correspondence with N distributed nodes, a first indication parameter in the N indication parameters indicates a communication capability and a computing capability of a first distributed node, and the first distributed node is any distributed node in the N distributed nodes; the logic circuit is configured to determine M network parameters based on the N indication parameters, wherein the M network parameters are in a one-to-one correspondence with M distributed nodes in the N distributed nodes, and a first network parameter in the M network parameters indicates at least one of a communication configuration or a neural network architecture configuration of the first distributed node; and the input/output interface is further configured to send the M network parameters, wherein N and M are positive integers, and M is less than or equal to N.

34. The apparatus according to claim 33, wherein the logic circuit is further configured to execute a computer program or instructions, causing the communication apparatus to perform the method according to any one of claims 2 and 3 and claims 6 to 12.

35. A communication apparatus, comprising a logic circuit and an input/output interface, wherein the input/output interface is configured to send a first indication parameter, and the first indication parameter indicates a communication capability and a computing capability of the communication apparatus; the input/output interface is further configured to receive a first network parameter, and the first network parameter indicates at least one of a communication configuration or a neural network architecture configuration of the communication apparatus; and the logic circuit is configured to determine at least one of the communication configuration or the neural network architecture configuration based on the first network parameter.

36. The apparatus according to claim 35, wherein the logic circuit is further configured to execute a computer program or instructions, causing the communication apparatus to perform the method according to any one of claims 5 to 12.

37. A computer-readable storage medium, comprising a computer program or instructions, wherein when the computer program or the instructions are run on a computer, the method according to any one of claims 1 to 12 is performed.

38. A computer program product, comprising instructions, wherein when the instructions are run on a computer, the method according to any one of claims 1 to 12 is performed.

39. A communication system, comprising the communication apparatus according to any one of claims 13 to 22 and the communication apparatus according to any one of claims 23 to 30.

FIG. 1

FIG. 2

| | Input | | Operation #1 | | Operation #2 | | Operation #3 |

FIG. 3

```
┌─────────────────────────┐                              ┌─────────────────────┐
│ Nᵗʰ distributed node     │                              │                     │
│         ...              │                              │   Central node      │
│ First distributed node   │                              │                     │
└─────────────────────────┘                              └─────────────────────┘
```

S410: Send an indication parameter corresponding
to a distributed node

S420: Determine M network parameters based on
N indication parameters, where the M network
parameters are in a one-to-one correspondence with
M distributed nodes in the N distributed nodes

S430: Send the M network parameters

FIG. 4

```
┌─────────────────────────┐                              ┌─────────────────────┐
│ Nᵗʰ terminal device      │                              │                     │
│         ...              │                              │   Network device    │
│ First terminal device    │                              │                     │
└─────────────────────────┘                              └─────────────────────┘
```

S510: Send an indication parameter corresponding
to a terminal device

S520: Determines M network parameters based on
N indication parameters, where the M network
parameters are in a one-to-one correspondence
with M terminal devices in the N terminal devices

S530: Send the M network parameters

S540: Perform AI model training and inference

FIG. 5

| Nth network device<br>...<br>First network device | | Terminal device |
|---|---|---|

S610: Send an indication parameter corresponding
to a network device

S620: Determine M network parameters based on
N indication parameters, where the M network
parameters are in a one-to-one correspondence with
M network devices in the N network devices

S630: Send the M network parameters

S640: Perform AI model training and inference

**FIG. 6**

| Nth distributed node<br>...<br>First distributed node | | Network device |
|---|---|---|

S710: Send an indication parameter corresponding
to a distributed node

S720: Determine M network parameters based on
N indication parameters, where the M network
parameters are in a one-to-one correspondence with
M distributed nodes in the N distributed nodes

S730: Send the M network parameters

S740: Perform AI model training and inference

**FIG. 7**

801

804

Processor

Memory

803

Bus

802

Communication
interface

FIG. 8

900

Transceiver unit 910

Processing unit 920

Storage unit 930

FIG. 9

1000

Processor 1010

Input/Output interface
1020

FIG. 10

## INTERNATIONAL SEARCH REPORT

| International application No. |
| --- |
| **PCT/CN2023/079973** |

**A. CLASSIFICATION OF SUBJECT MATTER**

H04L47/125(2022.01)i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

3GPP, IEEE, CNKI, CNTXT, ENTXTC: 分布, 计算能力, 模型, 人工智能, 神经网络, 通信能力, 训练, AI, distribut+, model, communication capabilit+, comput+ capabilit+

**C. DOCUMENTS CONSIDERED TO BE RELEVANT**

| Category* | Citation of document, with indication, where appropriate, of the relevant passages | Relevant to claim No. |
| --- | --- | --- |
| X | WO 2021158313 A1 (INTEL CORP.) 12 August 2021 (2021-08-12) description, paragraphs [0085], [0120], and [0560]-[0576] | 1-5, 10-15, 20-24, 28-39 |
| A | WO 2021247448 A1 (INTEL CORP.) 09 December 2021 (2021-12-09) entire document | 1-39 |
| A | WANG, Xiaofei et al. "In-Edge AI: Intelligentizing Mobile Edge Computing, Caching and Communication by Federated Learning" *IEEE*, Vol. 33, No. 5, 01 September 2019 (2019-09-01), 156-165 entire document | 1-39 |
| A | HOSSEINALIPOUR, S. et al. "From Federated to Fog Learning: Distributed Machine Learning over Heterogeneous Wireless Networks" *IEEE*, Vol. 58, No. 12, 01 December 2020 (2020-12-01), 41-47 entire document | 1-39 |
| A | TU, Yuwei et al. "Network-Aware Optimization of Distributed Learning for Fog Computing" *IEEE INFOCOM 2020-IEEE Conference on Computer Communications,* 06 July 2020 (2020-07-06), 2509-2518 entire document | 1-39 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **19 May 2023** | **26 May 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

| International application No. |
| --- |
| **PCT/CN2023/079973** |

| Patent document cited in search report | | | Publication date (day/month/year) | Patent family member(s) | | | Publication date (day/month/year) |
| --- | --- | --- | --- | --- | --- | --- | --- |
| WO | 2021158313 | A1 | 12 August 2021 | EP | 4100892 | A1 | 14 December 2022 |
| | | | | US | 2023068386 | A1 | 02 March 2023 |
| | | | | CN | 114930347 | A | 19 August 2022 |
| WO | 2021247448 | A1 | 09 December 2021 | EP | 4158558 | A1 | 05 April 2023 |

Form PCT/ISA/210 (patent family annex) (July 2022)

**REFERENCES CITED IN THE DESCRIPTION**

**Patent documents cited in the description**

- CN 202210240862